# EUROPEAN PATENT APPLICATION

(11) **EP 4 693 665 A1**
(43) Date of publication of application: **11.02.2026**
(21) Application number: 23929506.6
(22) Date of filing: 31.03.2023
(51) Int. Cl.: H01M 50/289

(54) **BATTERY MODULE AND ELECTRIC DEVICE**

(71) Applicant: Xiamen Ampack Technology Limited, Xiamen City, Fujian Province, 361000 (CN)
(72) Inventor: LI, Kunlong, Xiamen, Fujian 361000 (CN); NONG, Wenbin, Xiamen, Fujian 361000 (CN); WANG, Pengfei, Xiamen, Fujian 361000 (CN)
(74) Representative: Icosa
(86) International application number: PCT/CN2023/085760
(87) International publication number: WO 2024/197923

(57) **Abstract**

This application discloses a battery module and an electric device having the battery module. The battery module includes a housing, a battery cell assembly, and an elastic member. The battery cell assembly is disposed in the housing, where the battery cell assembly includes battery cell units arranged along a first direction. The elastic member includes a base and a bent portion. The base is connected to the bent portion. The bent portion is fixed to the housing, the elastic member and the battery cell assembly are arranged in the first direction. The base is configured to be able to apply pressure to the battery cell units, and the bent portion is configured to be able to provide an expansion space for the battery cell units, so as to buffer pressure applied to the battery cell assembly, thereby reducing impact on service life of the battery module. The base continuously applies pressure to the battery cell assembly, so that the battery cell assembly is in a pressurized state and maintains a dynamic balance, conducive to improving service life of the battery module.

## Description

### TECHNICAL FIELD

This application relates to the field of energy storage technologies, and in particular, to a battery module and an electric device.

### BACKGROUND

Battery modules are widely used in fields such as drones, electric vehicles, and intelligent energy storage devices. Battery modules employ a pressurization design to extend service life. However, currently, pressure is provided by foam steel strips, foam end plates, and the like, resulting in a relatively complex structure.

### SUMMARY

In view of this, it is necessary to provide a battery module and an electric device, so as to provide pressure and expansion space for battery cells, thereby reducing impact on service life of the battery module.

Some embodiments of this application provide a battery module including a housing, a battery cell assembly, and an elastic member. The battery cell assembly is disposed in the housing, where the battery cell assembly includes battery cell units arranged along a first direction. The elastic member includes a base and a bent portion. The base is connected to the bent portion. The bent portion is fixed to the housing. The elastic member and the battery cell assembly are arranged in the first direction. The base is configured to be able to apply pressure to the battery cell units, and the bent portion is configured to be able to provide an expansion space for the battery cell units, so as to buffer pressure applied to the battery cell assembly, thereby reducing impact on service life of the battery module. The base continuously applies pressure to the battery cell assembly, so that the battery cell assembly is in a pressurized state and maintains a dynamic balance, conducive to improving service life of the battery module.

Optionally, in some embodiments of this application, the bent portion includes a first bent portion and a second bent portion. The first bent portion is disposed opposite to the second bent portion along a second direction. The first bent portion and the second bent portion are respectively connected to two opposite sides of the base. The second direction is perpendicular to the first direction. The first bent portion and the second bent portion can provide an expansion space for the battery cell assembly.

Optionally, in some embodiments of this application, the elastic member includes a first connection section. The first connection section is connected to a side of the first bent portion, the side of the first bent portion being a side facing away from the base. The first connection section is fixed to the housing, so that an acting force on the bent portion is transferred to the housing.

Optionally, in some embodiments of this application, the first connection section is parallel to the base, which is conducive to deformation of the elastic member in the first direction.

Optionally, in some embodiments of this application, the first bent portion includes a first bent section and a second bent section. The first bent section is connected to the base and the second bent section. The second bent section is connected to the first connection section.

Optionally, in some embodiments of this application, a first included angle A₁ is formed between the first bent section and the base. A second included angle B₁ is formed between the second bent section and the first connection section, where A₁ ≥ B₁. This is conducive to improving deformation resistance of the first bent section and reducing the risk of deformation of the elastic member in the first direction.

Optionally, in some embodiments of this application, a third included angle C₁ is formed between the first bent section and the second bent section, where C₁ > A₁. This facilitates uniform deformation of the first bent portion.

Optionally, in some embodiments of this application, C₁ = 2A₁ = 2B₁. This further improves the uniform deformation of the first bent portion.

Optionally, in some embodiments of this application, the housing includes a top wall. The top wall is provided with a first fixed portion. Along the first direction, a projection of the first connection section overlaps a projection of the first fixed portion. The first connection section is fixed to the first fixed portion, so that the acting force on the bent portion can be transferred to the top wall.

Optionally, in some embodiments of this application, a structural strength of the top wall is higher than a structural strength of the elastic member, reducing the risk of deformation of the top wall caused by the acting force on the first bent portion.

Optionally, in some embodiments of this application, the elastic member includes a second connection section. The second connection section is connected to a side of the second bent portion, the side of the second bent portion being a side facing away from the base. The second connection section is fixed to the housing, so that the acting force on the bent portion can be transferred to the housing.

Optionally, in some embodiments of this application, the second connection section is parallel to the base, which facilitates the deformation of the elastic member in the first direction.

Optionally, in some embodiments of this application, the housing includes a bottom wall. The top wall is opposite to the bottom wall along the second direction. The bottom wall is provided with a second fixed portion. Along the first direction, a projection of the second connection section overlaps a projection of the second fixed portion. The second connection section is fixed to the second fixed portion, so that the acting force on the bent portion can be transferred to the bottom wall.

Optionally, in some embodiments of this application, a structural strength of the bottom wall is higher than the structural strength of the elastic member, reducing the risk of deformation of the bottom wall caused by the acting force on the first bent portion.

Optionally, in some embodiments of this application, the first bent portion and the second bent portion have identical structures, which facilitates uniform of stress and uniform deformation.

Optionally, in some embodiments of this application, the housing includes a front wall. The front wall and the battery cell assembly are arranged along the first direction. Along the first direction, the elastic member is disposed between the front wall and the battery cell assembly.

Optionally, in some embodiments of this application, the battery module includes two elastic members. Along the first direction, one of the two elastic members is disposed between the front wall and the battery cell assembly. The other elastic member is disposed on a side of the battery cell assembly, the side of the battery cell assembly being a side facing away from the front wall, the housing and the elastic member form an accommodation space, and the battery cell assembly is disposed in the accommodation space. This allows pressure to be further applied to the battery cell assembly, and allows for contraction according to expansion of the battery cell assembly to further provide an expansion space for the battery cell assembly, thereby improving the service life of the battery module. The housing and the elastic member form an accommodation space, which can reduce materials and lower costs.

Optionally, in some embodiments of this application, the housing and the elastic member form an accommodation space, where the battery cell assembly is disposed in the accommodation space, which can reduce materials and lower costs.

Optionally, in some embodiments of this application, each of the battery cell units includes a battery cell and a bracket, where the battery cell includes a battery cell housing, an electrode assembly disposed in the battery cell housing, and an electrode terminal connected to the electrode assembly and extending from the battery cell housing. The battery cell housing includes a body portion and a first sealing portion. The electrode assembly is disposed in the body portion. The body portion includes a first side surface and a second side surface arranged along the second direction. The electrode terminal extends from the first sealing portion. The bracket includes a first extension portion, where the first extension portion covers at least a portion of the first side surface. Along the first direction, the first extension portion is configured to be able to move relative to the housing, which can reduce friction between the body portion and the housing during movement. This facilitates movement and protects the body portion, reducing the risk of affecting use of the battery module due to damage to the body portion.

Optionally, in some embodiments of this application, a sliding member is disposed between the first extension portion and the top wall. The sliding member reduces a friction force between the first extension portion and the top wall, facilitating the first extension portion relative to the top wall.

Optionally, in some embodiments of this application, in a third direction, a portion of the first side surface and a portion of a second sealing portion are provided with the first extension portion. This can protect a portion of the body portion and a portion of the second sealing portion, increase the connection strength between the bracket and the battery cell, and facilitate integral formation of the bracket on the battery cell.

Optionally, in some embodiments of this application, in the third direction, the entire first side surface and the entire second sealing portion are provided with the first extension portion. This can better protect the body portion and the second sealing portion and better increase the connection strength between the bracket and the battery cell.

Optionally, in some embodiments of this application, the bracket includes a second extension portion, where the second extension portion covers at least a portion of the second side surface. Along the first direction, the second extension portion is configured to be able to move relative to the housing, which can reduce friction between the body portion and the housing during movement. This facilitates movement and protects the body portion, reducing the risk of affecting use of the battery module due to damage to the body portion.

Optionally, in some embodiments of this application, a sliding member is disposed between the second extension portion and the bottom wall. The sliding member reduces a friction force between the second extension portion and the bottom wall, facilitating movement of the second extension portion relative to the bottom wall.

Optionally, in some embodiments of this application, in the third direction, a portion of the second side surface and a portion of another second sealing portion are provided with the second extension portion. This can protect a portion of the body portion and a portion of the another second sealing portion, increase the connection strength between the bracket and the battery cell, and facilitate integral formation of the bracket on the battery cell.

Optionally, in some embodiments of this application, in the third direction, the entire second side surface and the entire another second sealing portion are provided with the second extension portion. This can better protect the body portion and the second sealing portion and better increase the connection strength between the bracket and the battery cell.

Optionally, in some embodiments of this application, the bracket is integrally formed on the battery cell, which is conducive to improving the connection strength between the bracket and the battery cell.

Optionally, in some embodiments of this application, the bracket includes an insulation bracket, which is conducive to reducing the risk of a short circuit between the bracket and the battery cell.

Optionally, in some embodiments of this application, adjacent body portions are in direct contact, allowing the body portion to be pressurized.

Optionally, in some embodiments of this application, adjacent battery cell housings exert pressure on each other, so that the plurality of battery cell units are in a pressurized state, conducive to improving service life of the battery cell units.

Optionally, in some embodiments of this application, the battery cell includes one of a pouch cell and a prismatic cell.

Optionally, in some embodiments of this application, the first sealing portion includes a first connection portion, a second connection portion, and a third connection portion. The bracket includes a first portion, where the first portion covers a portion of the first connection portion, and the electrode terminal extends from the first portion, protecting a portion of the first connection portion.

Optionally, in some embodiments of this application, the bracket includes a first side portion and a second side portion. The first side portion covers the second connection portion, and the second side portion covers the third connection portion, which can protect a portion of the first sealing portion.

Optionally, in some embodiments of this application, the bracket includes a second portion. The second portion covers a portion of a first wall. The second portion, the first portion, the first side portion, and the second side portion enclose a first space. A portion of the first connection portion is located in the first space, which can protect a peripheral side of the first connection portion. The first space provides an expansion space for the first sealing portion, reducing the impact of gas generation and/or free electrolyte in the battery cell on the sealing performance of the first sealing portion. The first space can also dissipate heat from the battery cell.

Optionally, in some embodiments of this application, when viewed along a direction opposite to the third direction, in the first direction, the second portion is located between a third wall and a fourth wall. The second portion does not extend beyond the third wall in the first direction, and the second portion does not extend beyond the fourth wall in the first direction. When adjacent battery cell housings are in direct contact, a gap exists between adjacent second portions. This reduces the impact of pressure applied between adjacent battery cell housings on the second portion, and reduces an acting force on the first sealing portion, which is conducive to protecting the first sealing portion and improving the stability of the bracket connecting to the battery cell.

Optionally, in some embodiments of this application, the bracket includes a third portion, where the third portion is connected to a side of the second portion facing the first portion. The third portion extends from the second portion along the third direction, and the third portion covers a portion of the first connection portion. The third portion can support and protect a portion of the first sealing portion extending beyond the second portion, reducing the risk of affecting the sealing performance of the battery cell due to damage to the first sealing portion.

Optionally, in some embodiments of this application, the bracket includes a fourth portion. The fourth portion is connected to the first portion. At least one electrode terminal is disposed at the fourth portion. Along the third direction, a projection of the electrode terminal overlaps a projection of the fourth portion, facilitating connection of a sampling member to the electrode terminal and improving the stability of the connection between the sampling member and the electrode terminal.

Optionally, in some embodiments of this application, the battery cell assembly includes a first battery cell unit and a second battery cell unit. Along the first direction, a second space exists between a bracket of the first battery cell unit and a bracket of the second battery cell unit. A fourth portion of the first battery cell unit faces a fourth portion of the second battery cell unit. The fourth portion of the second battery cell unit faces the fourth portion of the first battery cell unit.

Optionally, in some embodiments of this application, the battery cell assembly includes a third battery cell unit. The second battery cell unit and the third battery cell unit are arranged adjacent to each other along the first direction, and a fourth portion of the third battery cell unit is facing away from a first portion of the second battery cell unit.

Optionally, in some embodiments of this application, along the third direction, electrode terminals of the first battery cell unit, electrode terminals of the second battery cell unit, and electrode terminals of the third battery cell unit are stacked to form a first stacked portion. Along the third direction, a projection of the first stacked portion is located between a projection of the fourth portion of the second battery cell unit and a projection of the fourth portion of the third battery cell unit. This can reduce interference of the fourth portion with the first stacked portion, facilitating welding of the first stacked portion.

Optionally, in some embodiments of this application, along the third direction, a projection of the first stacked portion is located between a projection of the first portion of the second battery cell unit and a projection of the first portion of the third battery cell unit. This further facilitates welding of the first stacked portion, reducing the impact on the bracket during welding.

Optionally, in some embodiments of this application, along the first direction, a third space exists between a bracket of the third battery cell unit and a bracket of the second battery cell unit. Along the third direction, the projection of the first stacked portion is located within a projection of the third space. This can further reduce interference of the fourth portion with the first stacked portion, further facilitating welding of the first stacked portion.

Optionally, in some embodiments of this application, the battery cell assembly includes a fourth battery cell unit, where the third battery cell unit and the fourth battery cell unit are arranged adjacent to each other along the first direction. A fourth portion of the third battery cell unit faces a fourth portion of the fourth battery cell unit, and the fourth portion of the fourth battery cell unit faces the fourth portion of the third battery cell unit.

Optionally, in some embodiments of this application, along the first direction, a fourth space exists between a bracket of the third battery cell unit and a bracket of the fourth battery cell unit. An electrode terminal of the fourth battery cell unit is bent to connect to the first stacked portion, forming an overlap portion.

Optionally, in some embodiments of this application, along the third direction, a projection of the overlap portion is located between a projection of the fourth portion of the second battery cell unit and a projection of the fourth portion of the third battery cell unit, facilitating welding of the overlap portion.

Optionally, in some embodiments of this application, along the third direction, a projection of the overlap portion is located between a projection of the first portion of the second battery cell unit and a projection of the first portion of the third battery cell unit, further facilitating welding of the first stacked portion and reducing the impact on the bracket during welding.

Optionally, in some embodiments of this application, along the third direction, a projection of the overlap portion is located within a projection of the third space. This can further reduce interference of the fourth portion with the overlap portion, further facilitating welding of the overlap portion.

Optionally, in some embodiments of this application, the battery module includes a first conductive member, where one end of the first conductive member is fixed to the elastic member. The first conductive member includes a buffer portion. The buffer portion is configured to be stretched by the elastic member along the first direction when the battery cell assembly expands. The buffer portion can buffer the pulling exerted by the elastic member on the first conductive member, improving the connection strength between the first conductive member and the elastic member.

Optionally, in some embodiments of this application, the first conductive member is connected to the electrode terminal. The first conductive member is configured for electrical energy reception or output of the battery cell assembly. When the battery cell assembly expands, the buffer portion can alleviate the pulling on the electrode terminal, which is conducive to protecting the electrode terminal.

Optionally, in some embodiments of this application, the first conductive member includes a first conductive portion, a second conductive portion, and a third conductive portion. The buffer portion is disposed at the first conductive portion. The first conductive portion is connected to the third conductive portion. The second conductive portion is connected to the third conductive portion. The first conductive portion is more easily bent than the second conductive portion, and the first conductive portion is more easily stretched when the battery cell expands, facilitating movement of the battery cell unit.

Optionally, in some embodiments of this application, the third conductive portion is provided with a third fixed portion. The third fixed portion is fixed to the base of the elastic member, the base facing away from the front wall. Along the first direction, a projection of the third fixed portion and a projection of the battery cell housing are spaced apart from each other, allowing for better stretching of the first conductive member along the first direction.

Optionally, in some embodiments of this application, along the first direction, a distance between the buffer portion and the elastic member is less than a distance between the buffer portion and the elastic member close to the front wall, the elastic member is facing away from the front wall, further facilitating stretching of the buffer portion.

An embodiment of this application further provides an electric device including the battery module according to any one of the foregoing embodiments.

The battery module and the electric device can buffer the pressure applied to the battery cell assembly, reducing the impact on the service life of the battery module. Pressure is continuously applied to the battery cell assembly through the base, so that the battery cell assembly is in a pressurized state and maintains a dynamic balance, conducive to improving service life of the battery module.

### BRIEF DESCRIPTION OF DRAWINGS

FIG. 1 is a schematic structural diagram of a battery module according to some embodiments.
FIG. 2 is a schematic exploded view of a battery cell module according to some embodiments.
FIG. 3 is a schematic structural diagram of a top wall according to some embodiments.
FIG. 4 is a schematic partial structural diagram of a battery module according to some embodiments.
FIG. 5 is a schematic partial structural diagram of a battery module according to some embodiments.
FIG. 6 is a schematic structural diagram of a battery cell according to some embodiments.
FIG. 7 shows a schematic structural diagram of a battery cell viewed along a direction Z opposite to a third direction Z according to some embodiments.
FIG. 8 is a schematic exploded view of a battery cell according to some embodiments.
FIG. 9 is a schematic structural diagram of a battery cell according to some other embodiments.
FIG. 10 is a schematic structural diagram of a battery cell and a bracket according to some embodiments.
FIG. 11 is a schematic structural diagram of a battery cell and a bracket from another perspective according to some embodiments in FIG. 10.
FIG. 12 is a schematic structural diagram of a battery cell and a bracket from still another perspective according to some embodiments in FIG. 10.
FIG. 13 is a schematic structural diagram of a battery cell and a bracket from yet another perspective according to some embodiments in FIG. 10.
FIG. 14 shows a schematic structural diagram of a battery cell unit viewed along a direction Z' opposite to a third direction Z according to some embodiments.
FIG. 15 is a schematic structural diagram of a portion in FIG. 10 according to some embodiments.
FIG. 16 is a schematic structural diagram of another portion in FIG. 10 according to some embodiments.
FIG. 17 is a schematic structural diagram of a battery cell unit and an elastic member according to some embodiments.
FIG. 18 is a schematic structural diagram of an elastic member according to some embodiments.
FIG. 19 is a schematic structural diagram of an elastic member from another perspective according to some embodiments.
FIG. 20 is a schematic structural diagram of an elastic member from still another perspective according to some embodiments.
FIG. 21 is a cross-sectional view of a plurality of battery cell units according to some embodiments.
FIG. 22 is an enlarged view of a portion in FIG. 21.
FIG. 23 is a schematic partial structural diagram of a battery module according to some embodiments.
FIG. 24 is an enlarged view of a portion in FIG. 23.
FIG. 25 is a schematic partial structural diagram of a battery module from another perspective according to some embodiments.
FIG. 26 is an enlarged view of a portion in FIG. 25.
FIG. 27 is a schematic structural diagram of a sampling member according to some embodiments.

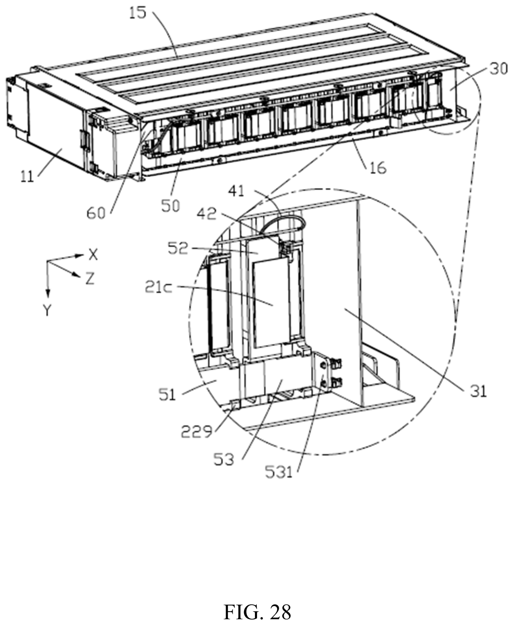

FIG. 28 is a schematic partial structural diagram of a battery module according to some embodiments.
FIG. 29 is a schematic structural diagram of a first conductive member according to some embodiments.
FIG. 30 is a schematic structural diagram of a second conductive member according to some embodiments.
FIG. 31 is a schematic structural diagram of an electric device according to some embodiments.

**Description of reference signs:**

| | |
|---|---|
| Battery module | 100 |
| Housing | 10 |
| First side wall | 11 |
| Second side wall | 12 |
| Front wall | 13 |
| Top wall | 14 |
| First fixed portion | 141 |
| Bottom wall | 15 |
| Second fixed portion | 151 |
| Battery cell assembly | 20 |
| Battery cell unit | 20a |
| First space | 20b |
| Second space | 20c |
| First stacked portion | 20d |
| Third space | 20e |
| Fourth space | 20f |
| Overlap portion | 20g |
| First battery cell unit | 201 |
| Second battery cell unit | 202 |
| Third battery cell unit | 203 |
| Fourth battery cell unit | 204 |
| Battery cell | 21 |
| Battery cell housing | 21a |
| Electrode assembly | 21b |
| Electrode terminal | 21c |
| Body portion | 211 |
| First wall | 211c |
| Second wall | 211d |
| Third wall | 211e |
| Fourth wall | 211f |
| First side surface | 211g |
| Second side surface | 211h |
| First housing | 211a |
| First recess | 2111 |
| Second housing | 211b |
| Second recess | 2112 |
| First extension side | 2113 |
| Second extension side | 2114 |
| First sealing portion | 212 |
| First connection portion | 212a |
| Second connection portion | 212b |
| Third connection portion | 212c |
| Second sealing portion | 213 |
| Bracket | 22 |
| First portion | 221 |
| First side portion | 222 |
| First gap | 222a |
| Second side portion | 223 |
| Second gap | 223a |
| First extension portion | 224 |
| Second extension portion | 225 |
| Second portion | 226 |
| Third portion | 227 |
| Fourth portion | 228 |
| Third side surface | 228a |
| Fourth side surface | 228b |
| Step portion | 228c |
| First step surface | 2281 |
| First limiting portion | 2281a |
| Second step surface | 2282 |
| Fourth fixed portion | 229 |
| First limiting protrusion | 229a |
| Second limiting protrusion | 229b |
| First protruding portion | 210 |
| Third recess | 220 |
| Second protruding portion | 230 |
| Fourth recess | 240 |
| Elastic member | 30 |
| Base | 31 |
| Protrusion | 311 |
| Bent portion | 32 |
| First bent portion | 321 |
| First bent section | 321a |
| Second bent section | 321b |
| Second bent portion | 322 |
| First connection section | 323 |
| Second connection section | 324 |
| First buffer member | 101 |
| Second buffer member | 102 |
| Connection terminal | 103 |
| Collection assembly | 40 |
| Wire | 41 |
| Sampling member | 42 |
| Opening | 42a |
| First part | 421 |
| First section | 421a |
| Third section | 421b |
| First curved portion | 4211 |
| Second part | 422 |
| Second section | 422a |
| Fourth section | 422b |
| Second curved portion | 4221 |
| Third part | 423 |
| First conductive member | 50 |
| Buffer portion | 501 |
| First bent element | 5011 |
| Second bent element | 5012 |
| First conductive portion | 51 |
| Straight portion | 511 |
| Second conductive portion | 52 |
| Third conductive portion | 53 |
| Third fixed portion | 531 |
| Fourth conductive portion | 54 |
| Second conductive member | 60 |
| Fifth conductive portion | 61 |
| Sixth conductive portion | 62 |
| Circuit board | 70 |
| Electric device | 200 |
| First direction | X |
| Second direction | Y |
| Third direction | Z |

Some following specific embodiments will further describe this application in conjunction with the foregoing drawings.

### DETAILED DESCRIPTION OF EMBODIMENTS

Some following specific embodiments are exemplary and not restrictive, aiming to provide a basic understanding of this application but not to confirm critical or decisive elements of this application and not to limit the scope of protection. As long as there is no structural conflict, the various technical features mentioned in various embodiments can be combined in any manner.

When one component is assumed as being "disposed at/on/in" another component, the component may be provided directly at/on/in the another component or with a component possibly present therebetween. When one component is assumed as being "connected to" another component, it may be connected to the another component directly or with a component possibly present therebetween.

It should be understood that the terms "perpendicular" and "equal to" are used for describing an ideal state of two components. During actual production or use, an approximately perpendicular or equal state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The term "parallel" is used for describing an ideal state of two components. During actual production or use, an approximately parallel state may be present between the two components. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of" in the specification specifically indicates that there are two or more components when used for describing the number of components.

In a first direction X includes the first direction X and a direction opposite to the first direction X, in a second direction Y includes the second direction Y and a direction opposite to the second direction Y, and in a third direction Z includes the third direction Z and a direction opposite to the third direction Z.

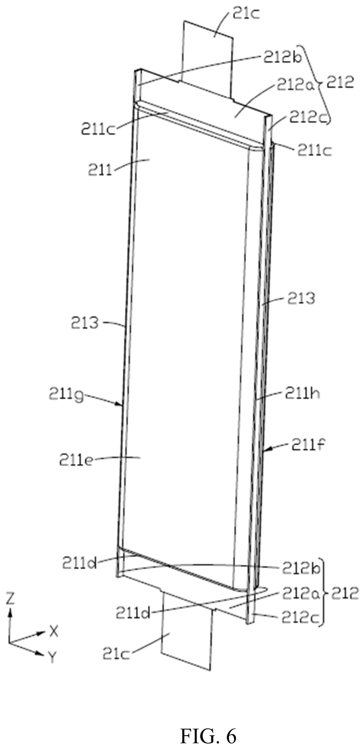

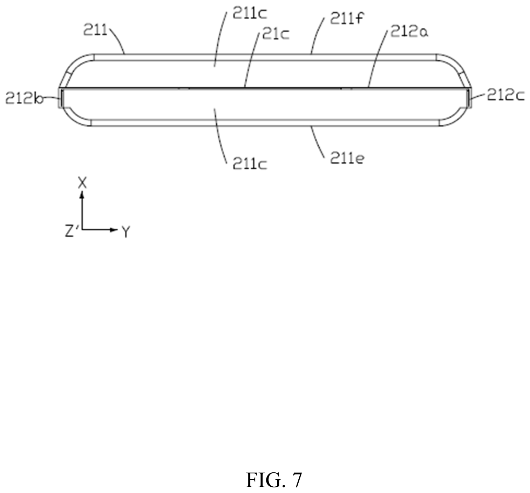

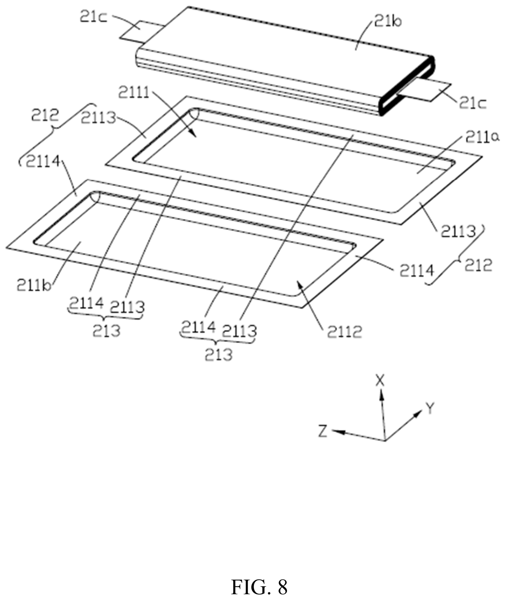

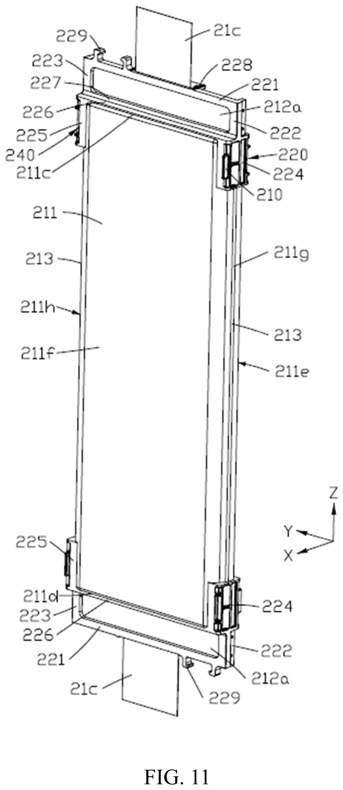

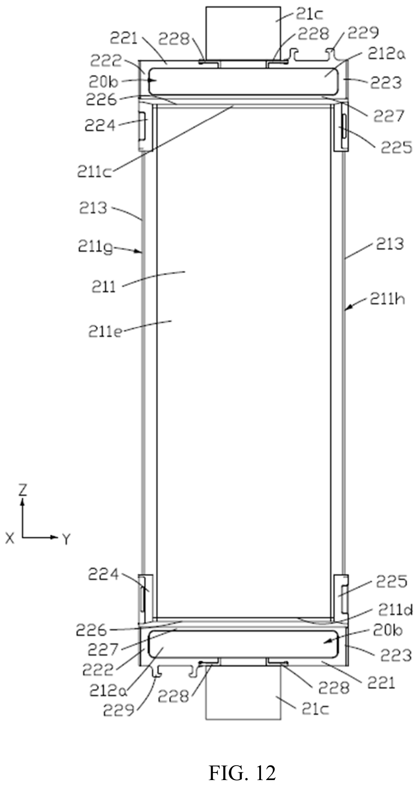

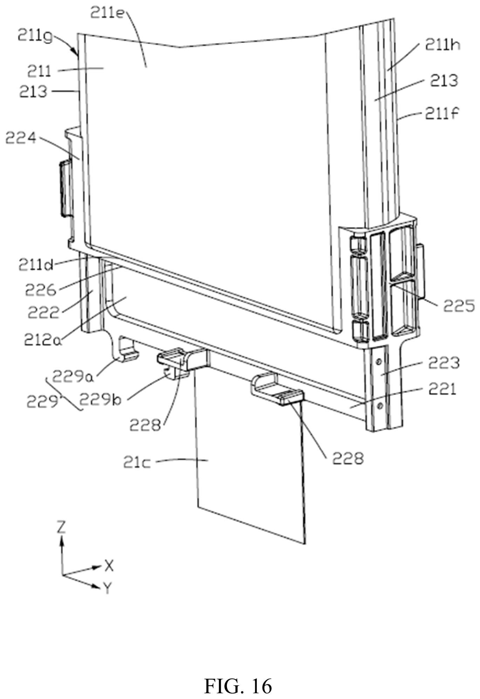

For ease of description, in FIGs. 6 to 8, FIGs. 10 to 12, and FIGs. 15 and 16, an electrode terminal 21c is not bent.

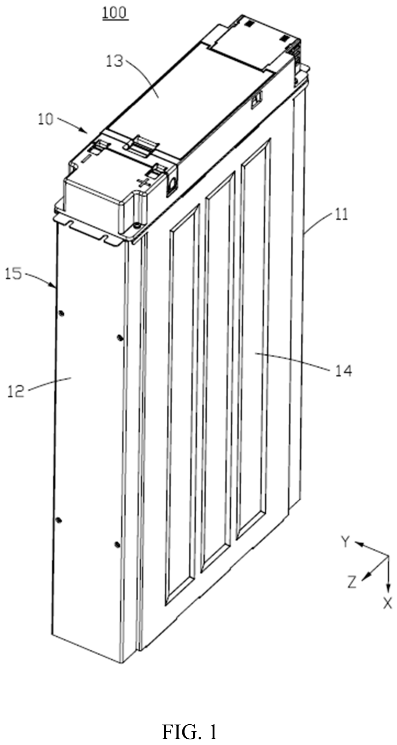

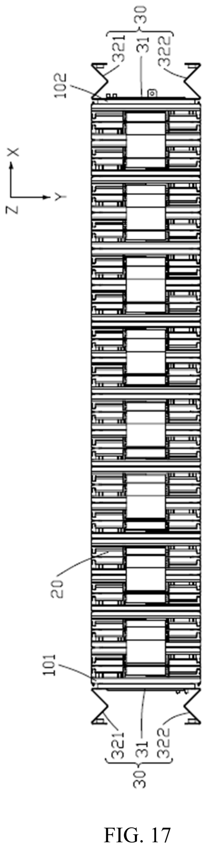

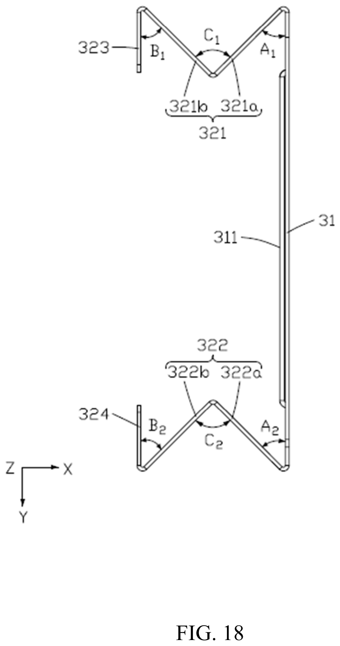

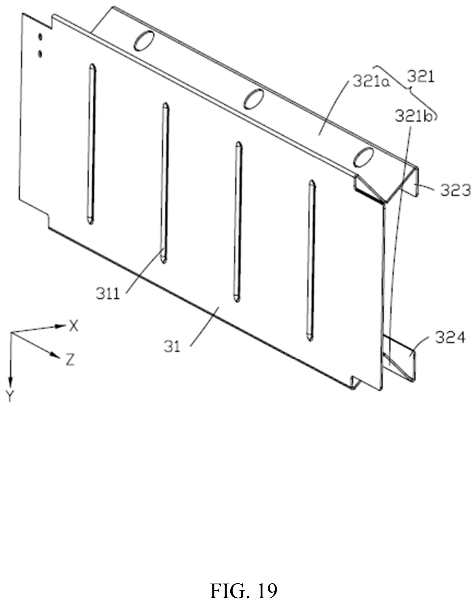

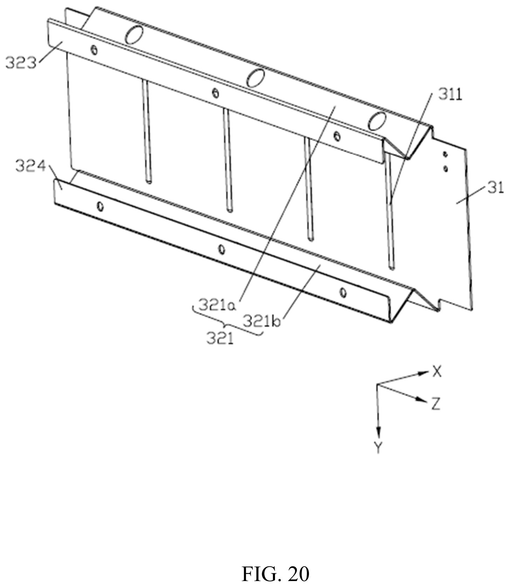

Referring to FIGs. 1 to 5 and FIGs. 17 to 20, an embodiment of this application provides a battery module 100 including a housing 10, a battery cell assembly 20, and an elastic member 30. The battery cell assembly 20 is disposed in the housing 10, where the battery cell assembly 20 includes a plurality of battery cell units 20a arranged along a first direction X. The elastic member 30 includes a base 31 and a bent portion 32, where the base 31 is connected to the bent portion 32, and the bent portion 32 is fixed to the housing 10. In the first direction X, the elastic member 30 and the battery cell assembly 20 are arranged. The base 31 is configured to be able to apply pressure to the battery cell assembly 20, and the bent portion 32 is configured to provide an expansion space for the battery cell assembly 20. In first direction X includes the first direction X and a direction opposite to the first direction X.

In some embodiments, when the battery cell assembly 20 expands, the pressure applied to the battery cell assembly 20 increases. An expansion space is provided for the battery cell assembly 20 through the bent portion 32, to buffer the pressure applied to the battery cell assembly 20, reducing the impact on the service life of the battery module 100. Pressure is continuously applied to the battery cell assembly 20 through the base 31, so that the battery cell assembly 20 is in a pressurized state and maintains a dynamic balance, conducive to improving service life of the battery module 100.

In some embodiments, along the first direction X, the elastic member 30 and the battery cell assembly 20 are arranged.

In some embodiments, along a direction opposite to the first direction X, the elastic member 30 and the battery cell assembly 20 are arranged.

In some embodiments, when the battery module 100 includes a plurality of battery cell assemblies 20, the elastic member 30 may be disposed between two adjacent battery cell assemblies 20.

In some embodiments, the housing 10 includes a first side wall 11, a second side wall 12, a front wall 13, a top wall 14, a bottom wall 15, and a rear wall (not shown in the figure). The top wall 14 and the bottom wall 15 are arranged along a second direction Y, and the first side wall 11 and the second side wall 12 are arranged along a third direction Z. The front wall 13 is connected to the first side wall 11 and the second side wall 12. The first direction X, the third direction Z, and the second direction Y are perpendicular to each other. The top wall 14 is connected to the front wall 13, the first side wall 11, and the second side wall 12, the bottom wall 15 is connected to the front wall 13, the first side wall 11, and the second side wall 12, and the front wall 13, the first side wall 11, the second side wall 12, the top wall 14, the bottom wall 15, and the rear wall form an accommodation space, where the battery cell assembly 20 and the elastic member 30 are disposed in the accommodation space.

Referring to FIGs. 1 to 5, in some embodiments, the housing 10 includes a front wall 13, a first side wall 11, a second side wall 12, a top wall 14, and a bottom wall 15. The front wall 13 and the elastic member 30 are arranged along the first direction X, the top wall 14 and the bottom wall 15 are arranged along the second direction Y, and the first side wall 11 and the second side wall 12 are arranged along the third direction Z. The front wall 13 is connected to the first side wall 11 and the second side wall 12. The top wall 14 is connected to the front wall 13, the elastic member 30, the first side wall 11, and the second side wall 12. The bottom wall 15 is connected to the front wall 13, the elastic member 30, the first side wall 11, and the second side wall 12. The top wall 14, the bottom wall 15, the front wall 13, the elastic member 30, the first side wall 11, and the second side wall 12 form an accommodation space, where the battery cell assembly 20 is disposed in the accommodation space. This facilitates omission of a rear wall, simplifying an assembly process.

Referring to FIGs. 6, 7, and 8, the battery cell unit 20a includes a battery cell 21, where the battery cell 21 includes a pouch cell. The battery cell 21 includes a battery cell housing 21a, an electrode assembly 21b, and an electrode terminal 21c, where the electrode terminal 21c is connected to the electrode assembly 21b and extends from the battery cell housing 21a.

In some embodiments, the battery cell housing 21a includes a body portion 211, where the body portion 211 is provided with an accommodation space, and the electrode assembly 21b is disposed in the body portion 211. The body portion 211 includes a first housing 211a and a second housing 211b, where the first housing 211a is provided with a first recess 2111, and the second housing 211b is provided with a second recess 2112. The first housing 211a is connected to the second housing 211b, forming the accommodation space. A portion of the electrode assembly 21b is disposed in the first recess 2111, and a portion is disposed in the second recess 2112.

In some embodiments, the body portion 211 is provided with an accommodation space, where the body portion 211 includes a first housing 211a and a second housing 211b, the first housing 211a is provided with a first recess 2111, and the second housing 211b is flat. The first housing 211a is connected to the second housing 211b, forming the accommodation space. The electrode assembly 21b is disposed in the first recess 2111.

In some embodiments, the battery cell housing 21a includes a first sealing portion 212 and a second sealing portion 213, where the electrode terminal 21c extends out of the battery cell housing 21a from the first sealing portion 212. A peripheral side of the first housing 211a extends outward to form a first extension side 2113, and a peripheral side of the second housing 211b extends outward to form a second extension side 2114. After the first housing 211a is connected to the second housing 211b, the first extension side 2113 and the second extension side 1114 overlap and are hermetically connected to form two first sealing portions 212 and two second sealing portions 213. The two first sealing portions 212 are arranged along the third direction Z, and the two second sealing portions 213 are arranged along the second direction Y, where one of the first sealing portions 212 is connected to the two second sealing portions 213, and the other first sealing portions 212 is connected to the two second sealing portions 213.

Optionally, the battery cell 21 includes two electrode terminals 21c, where one of the electrode terminals 21c extends out of the battery cell housing 21a from one of the first sealing portions 212, and the other electrode terminal 21c extends out of the battery cell housing 21a from the other first sealing portion 212.

In some embodiments, the battery cell 21 includes two electrode terminals 21c, where the two electrode terminals 21c extend out of the battery cell housing 21a from the same first sealing portion 212.

In some embodiments, the first extension side 2113 and the second extension side 2114 overlap and are hermetically connected to form a first sealing portion 212 and two second sealing portions 213. The two second sealing portions 213 are arranged along the second direction Y, and the first sealing portion 212 is connected to the two second sealing portions 213. The battery cell 21 includes two electrode terminals 21c, where the two electrode terminals 21c extend out of the battery cell housing 21a from the first sealing portion 212.

In some embodiments, the body portion 211 includes a first wall 211c, a second wall 211d, a third wall 211e, and a fourth wall 211f. The second wall 211d and the first wall 211c are arranged along the third direction Z, and the third wall 211e and the fourth wall 211f are arranged along the first direction X. Optionally, the first sealing portion 212 is connected to the first wall 211c. Optionally, one of the first sealing portions 212 is connected to the first wall 211c, and the other first sealing portion 212 is connected to the second wall 211d.

In some embodiments, the body portion 211 includes a first side surface 211g and a second side surface 211h, where the first side surface 211g and the second side surface 211h are arranged along the second direction Y. One of the second sealing portions 213 is connected to the first side surface 211g, and the other second sealing portion 213 is connected to the second side surface 211h.

In some embodiments, the first sealing portion 212 includes a first connection portion 212a, a second connection portion 212b, and a third connection portion 212c. The electrode terminal 21c extends from the first connection portion 212a. The first connection portion 212a is connected to the second connection portion 212b and the third connection portion 212c, and the second connection portion 212b and the third connection portion 212c are arranged along the second direction Y. The second connection portion 212b is bent relative to the first connection portion 212a, and the third connection portion 212c is bent relative to the first connection portion 212a. When viewed along a direction Z' opposite to the third direction Z, in the first direction X, the second connection portion 212b and the third connection portion 212c are located on a same side of the first connection portion 212a.

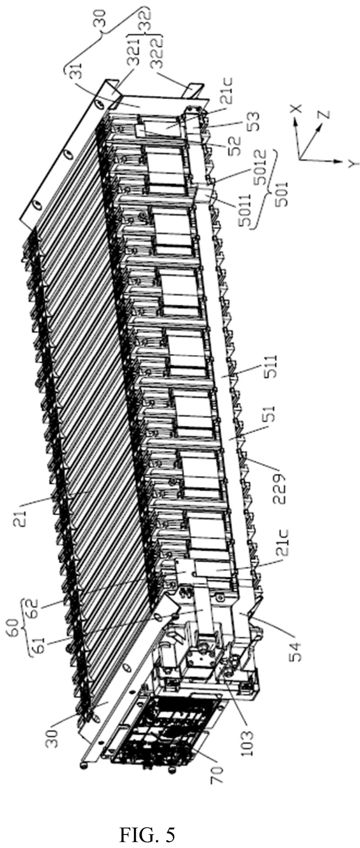

Referring to FIGs. 5 and 6, in some embodiments, adjacent body portions 211 are in direct contact, allowing the body portion 211 to be pressurized. Optionally, the third wall 211e of the battery cell housing 21a is in direct contact with the fourth wall 211f of an adjacent battery cell housing 21a. Optionally, the third wall 211e of the battery cell housing 21a is in direct contact with the third wall 211e of an adjacent battery cell housing 21a, and the fourth wall 211f of the battery cell housing 21a is in direct contact with the fourth wall 211f of an adjacent battery cell housing 21a.

In some embodiments, adjacent battery cell housings 21a exert pressure on each other, so that the plurality of battery cell units 20a are in a pressurized state, conducive to improving service life of the battery cell units.

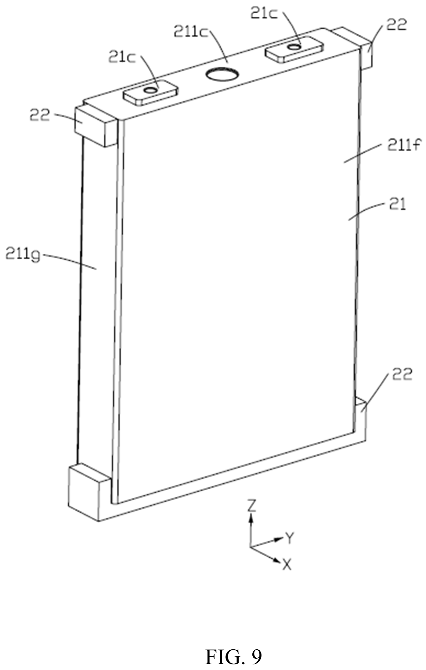

Referring to FIG. 9, in some embodiments, the battery cell 21 includes a prismatic cell. The prismatic cell includes a hard shell. The electrode assembly 21b is disposed in the hard shell.

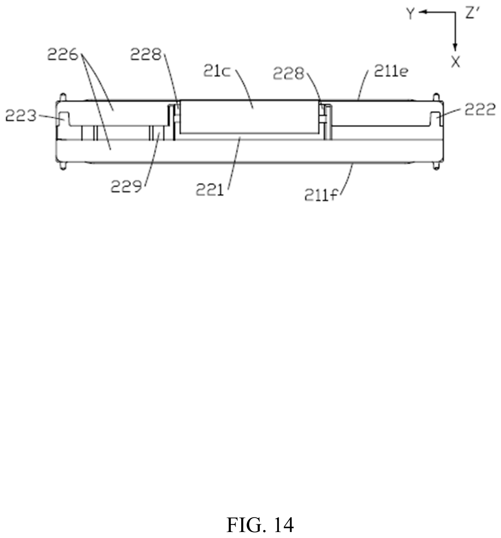

Referring to FIGs. 6, 10 to 16, in some embodiments, each battery cell unit 20a includes a bracket 22. The bracket 22 is connected to the battery cell 21 to protect the battery cell 21.

In some embodiments, the bracket 22 is integrally formed on the battery cell 21, which is conducive to improving the connection strength between the bracket 22 and the battery cell 21. Optionally, the bracket 22 is integrally formed with the battery cell 21 through low-pressure injection molding.

In some embodiments, the bracket 22 includes an insulation bracket, which is conducive to reducing the risk of a short circuit between the bracket 22 and the battery cell 21.

In some embodiments, an outer surface of the body portion 211 may include some insulation members such as an insulation film, to better protect the body portion 211.

In some embodiments, the bracket 22 includes a first portion 221. The first portion 221 covers a portion of the first connection portion 212a to protect a portion of the first connection portion 212a. The electrode terminal 21c extends from the first portion 221.

In some embodiments, the bracket 22 includes a first side portion 222 and a second side portion 223. The first side portion 222 covers the second connection portion 212b, and the second side portion 223 covers the third connection portion 212c, to protect a portion of the first sealing portion 212.

In some embodiments, the first portion 221 is connected to the first side portion 222 and the second side portion 223, which can improve the structural strength of the bracket 22 and facilitate protection for the first sealing portion 212.

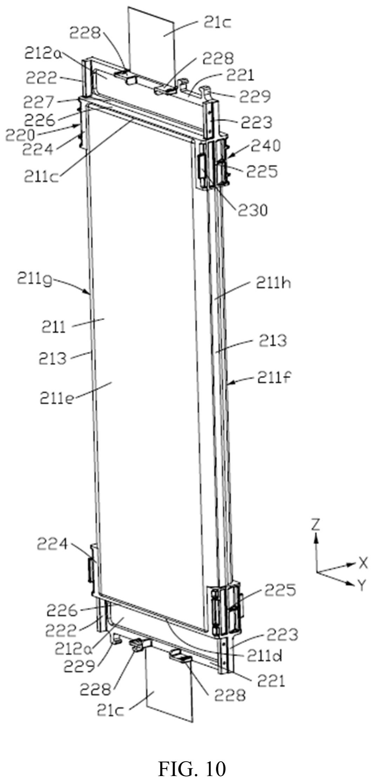

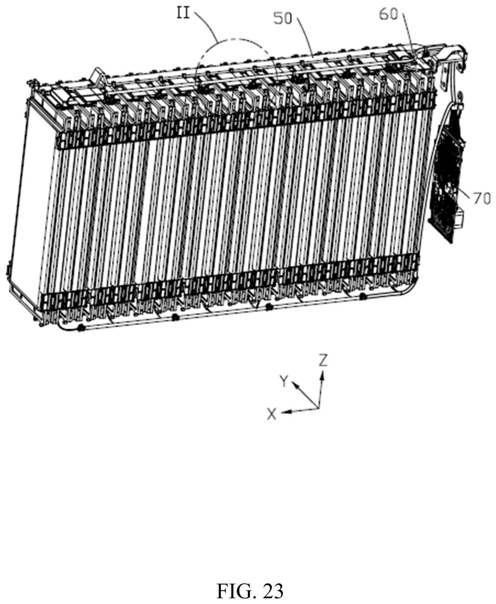

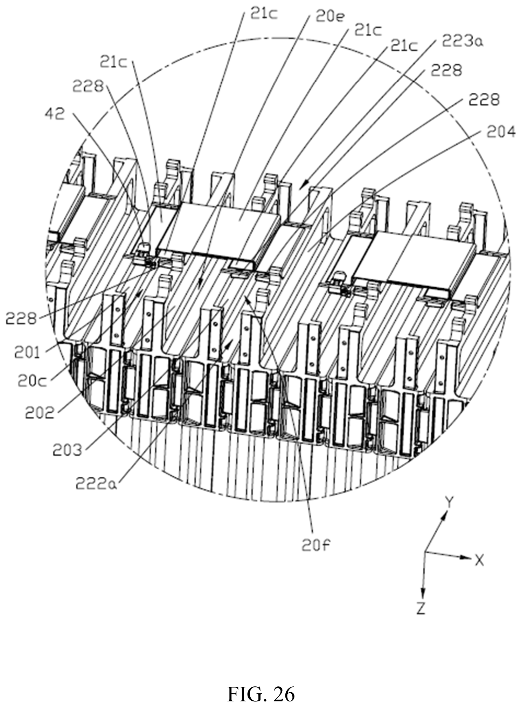

Referring to FIGs. 10 to 16, 23, and 26, in some embodiments, the bracket 22 includes a first extension portion 224. When viewed along a direction Z' opposite to the third direction Z, the first extension portion 224 extends from the first side portion 222. The first extension portion 224 covers the first side surface 211g and the second sealing portion 213, which can protect the body portion 211 and the second sealing portion 213 and increase the connection strength between the bracket 22 and the battery cell 21. The first extension portion 224 is connected to the top wall 14, and the first extension portion 224 is configured to be able to move relative to the top wall 14, reducing friction between the body portion 211 and the top wall 14 during movement. This facilitates movement and protects the body portion 211, reducing the risk of affecting use of the battery module due to damage to the body portion 211.

In some embodiments, the first extension portion 224 is in direct contact with the top wall 14.

In some embodiments, a sliding member (not shown in the figure) is disposed between the first extension portion 224 and the top wall 14. The sliding member reduces a friction force between the first extension portion 224 and the top wall 14, facilitating movement of the first extension portion 224 relative to the top wall 14.

Optionally, in the third direction Z, a portion of the first side surface 211g and a portion of the second sealing portion 213 are provided with the first extension portion 224. This can protect a portion of the body portion 211 and a portion of the second sealing portion 213, increase the connection strength between the bracket 22 and the battery cell 21, and facilitate integral formation of the bracket 22 on the battery cell 21.

Optionally, in the third direction Z, the entire first side surface 211g and the entire second sealing portion 213 are provided with the first extension portion 224. This can better protect the body portion 211 and the second sealing portion 213 and better increase the connection strength between the bracket 22 and the battery cell 21.

In some embodiments, when viewed along the direction Z' opposite to the third direction Z, in the first direction, the first side portion 222 does not extend beyond the first extension portion 224, and a first gap 222a is formed between adjacent first side portions 222. When adjacent battery cell housings 21a are in direct contact with each other and apply pressure to each other, the first gap 222a can reduce an acting force on the first side portion 222, thereby reducing an acting force on the first sealing portion 212 and helping to protect the first sealing portion 212. The first gap 222a is also conducive to heat dissipation of the battery cell 21.

In some embodiments, the bracket 22 includes a second extension portion 225. When viewed along the direction Z' opposite to the third direction Z, the second extension portion 225 extends from the second side portion 223. The second extension portion 225 covers the second side surface 211h and the other second sealing portion 213, protecting the body portion 211 and the other second sealing portion 213, and further increasing the connection strength between the bracket 22 and the battery cell 21. When viewed along the first direction X, in the second direction Y, a portion of the body portion 211 is located between the first extension portion 224 and the second extension portion 225. The second extension portion 225 is connected to the bottom wall 15, and the second extension portion 225 is configured to be able to move relative to the bottom wall 15, reducing friction between the body portion 211 and the bottom wall 15 during movement. This facilitates movement and protects the body portion 211, reducing the risk of affecting use of the battery module due to damage to the body portion 211.

In some embodiments, the second extension portion 225 is in direct contact with the bottom wall 15.

In some embodiments, a sliding member (not shown in the figure) is disposed between the second extension portion 225 and the bottom wall 15. The sliding member reduces a friction force between the second extension portion 225 and the bottom wall 15, facilitating movement of the second extension portion 225 relative to the bottom wall 15.

Optionally, in the third direction Z, a portion of the second side surface 211h and a portion of the other second sealing portion 213 are provided with the second extension portion 225. This can protect a portion of the body portion 211 and a portion of the other second sealing portion 213, increase the connection strength between the bracket 22 and the battery cell 21, and facilitate integral formation of the bracket 22 on the battery cell 21.

Optionally, in the third direction Z, the entire second side surface 211h and the entire other second sealing portion 213 are provided with the second extension portion 225. This can better protect the body portion 211 and the second sealing portion 213 and better increase the connection strength between the bracket 22 and the battery cell 21.

In some embodiments, when viewed along the direction Z' opposite to the third direction Z, in the first direction X, the second side portion 223 does not extend beyond the second extension portion 225, and a second gap 223a is formed between adjacent second side portions 223. When adjacent battery cell housings 21a are in direct contact with each other and apply pressure to each other, the second gap 223a can reduce an acting force on the second side portion 223, thereby further reducing an acting force on the first sealing portion 212 and further helping to protect the first sealing portion 212. The second gap 223a is also conducive to heat dissipation of the battery cell 21.

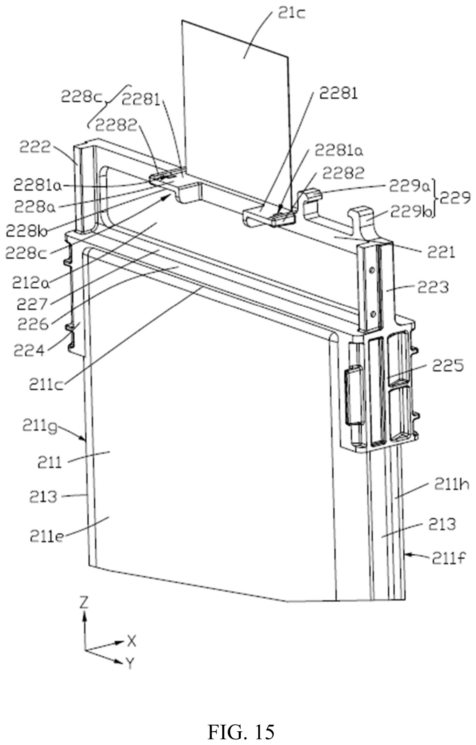

Referring to FIG. 15, in some embodiments, the bracket 22 includes a second portion 226. The second portion 226 covers a portion of the first wall 211c to protect the body portion 211. One end of the first portion 221 is connected to the first side portion 222, and another end is connected to the second side portion 223. One end of the second portion 226 is connected to the first side portion 222, and another end is connected to the second side portion 223. This can further increase the structural strength of the bracket 22 and further facilitate protection for the first sealing portion 212. The second portion 226, the first portion 221, the first side portion 222, and the second side portion 223 enclose a first space 20b, where a portion of the first connection portion 212a is located in the first space 20b. The first portion 221, the first side portion 222, the second side portion 223, and the second portion 226 protect a peripheral side of the first connection portion 212a. The first space 20b provides an expansion space for the first sealing portion 212, reducing the impact of gas generation and/or free electrolyte in the battery cell 21 on the sealing performance of the first sealing portion 212. The first space 20b can also dissipate heat from the battery cell 21.

In some embodiments, the battery cell 21 includes an electrolyte, where the electrolyte is disposed in the battery cell housing 21a. The electrode assembly 21b includes a first electrode plate, a separator, and a second electrode plate. The electrode assembly 21b is formed by winding or stacking the first electrode plate, the separator, and the second electrode plate. Some of the electrolyte infiltrates the first electrode plate, the separator, and the second electrode plate to conduct ions, and some of the electrolyte adheres to a surface of the battery cell housing 21a and/or a surface of the electrode assembly 21b in a free state, where the electrolyte in the free state is a free electrolyte. During cycling of a plurality of battery cells 21, the free electrolyte in the battery cell 21 is squeezed. According to this application, the first space 20b provides an expansion space for the first sealing portion 212, reducing the impact of expansion of the battery cell 21 on the sealing performance of the first sealing portion 212.

Referring to FIGs. 10 to 13, in some embodiments, along the first direction X, the bracket 22 includes a first protruding portion 210 and a third recess 220. The third recess 220 is disposed at the first extension portion 224, and the first protruding portion 210 extends from the first extension portion 224. When body portions 211 of adjacent battery cells 21 are in direct contact, the first protruding portion 210 is disposed in the third recess 220 of an adjacent bracket 22, and a gap exists between the first protruding portion 210 and the third recess 220. Adjacent brackets 22 are positioned via the third recess 220 and the first protruding portion 210, reducing displacement of adjacent body portions 211 and allowing a plurality of body portions 211 to apply pressure to each other. The gap between the first protruding portion 210 and the third recess 220 can reduce the stress on the bracket 22, improve the protection for the first sealing portion 212, and enhance the connection strength between the bracket 22 and the battery cell 21.

In some embodiments, along the first direction X, the bracket 22 includes a second protruding portion 230 and a fourth recess 240. The fourth recess 240 is disposed at the second extension portion 225, and the second protruding portion 230 extends from the second extension portion 225. When body portions of adjacent battery cells 21 are in direct contact with each other, the second protruding portion 230 is disposed in a fourth recess 240 of an adjacent bracket 22. A gap exists between the second protruding portion 230 and the fourth recess 240. Adjacent brackets 22 are further positioned via the fourth recess 240 and the second protruding portion 230, further reducing displacement of adjacent body portions 211 and further allowing a plurality of body portions 211 to apply pressure to each other. The gap between the second protruding portion 230 and the fourth recess 240 can reduce the stress on the bracket 22, further improve the protection for the first sealing portion 212, and further enhance the connection strength between the bracket 22 and the battery cell 21.

In some embodiments, when viewed along the direction Z' opposite to the third direction Z, in the first direction X, the second portion 226 is located between the third wall 211e and the fourth wall 211f. The second portion 226 does not extend beyond the third wall 211e in the first direction X, and the second portion 226 does not extend beyond the fourth wall 211f in the first direction X. When adjacent battery cell housings 21a are in direct contact, a gap exists between adjacent second portions 226. This reduces the impact of pressure applied between adjacent battery cell housings 21a on the second portion 226, and reduces an acting force on the first sealing portion 212, which is conducive to protecting the first sealing portion 212 and improving the stability of the bracket 22 connecting to the battery cell 21.

Referring to FIG. 15, in some embodiments, the bracket 22 includes a third portion 227. The third portion 227 is connected to a side of the second portion 226, the side of the second portion 226 being a side facing the first portion 221, the third portion 227 extends from the second portion 226 along the third direction Z, and the third portion 227 covers a portion of the first connection portion 212a. The third portion 227 can support and protect a portion of the first sealing portion 212 extending beyond the second portion 226, reducing the risk of affecting the sealing performance of the battery cell 21 due to damage to the first sealing portion 212.

Referring to FIGs. 10 to 16, in some embodiments, the battery cell unit 20a includes two brackets 22, where one of the brackets 22 is connected to a portion of the first sealing portion 212, and the other bracket 22 is connected to a portion of the other first sealing portion 212. One of the electrode terminals 21c extends from the first sealing portion 212 and the bracket 22 along the third direction Z, and the other electrode terminal 21c extends from the second sealing portion 213 and the bracket 22 in a direction opposite to the third direction Z. The two brackets 22 enhance protection for the first sealing portion 212, provide an expansion space for the first sealing portion 212, reduce the impact of gas generation and/or free electrolyte in the battery cell 21 on the sealing performance of the first sealing portion 212, and help to dissipate heat of the first sealing portion 212.

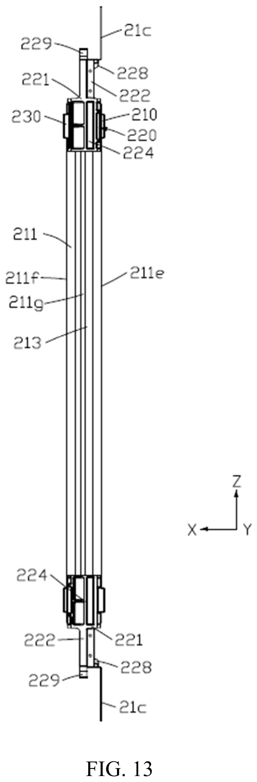

Referring to FIGs. 13 to 16, in some embodiments, the bracket 22 includes a fourth portion 228, where the fourth portion 228 is connected to the first portion 221, and at least one electrode terminal 21c is disposed at the fourth portion 228. Along the third direction Z, a projection of the electrode terminal 21c overlaps a projection of the fourth portion 228.

In some embodiments, the fourth portion 228 and the first portion 221 are arranged along the first direction X, and along a direction opposite to the first direction X, the fourth portion 228 extends from the first portion 221.

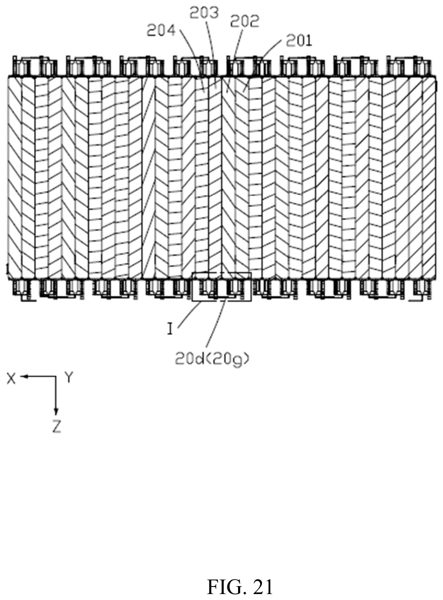

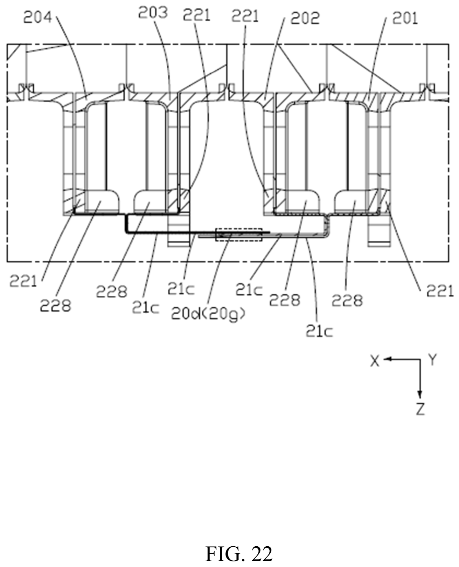

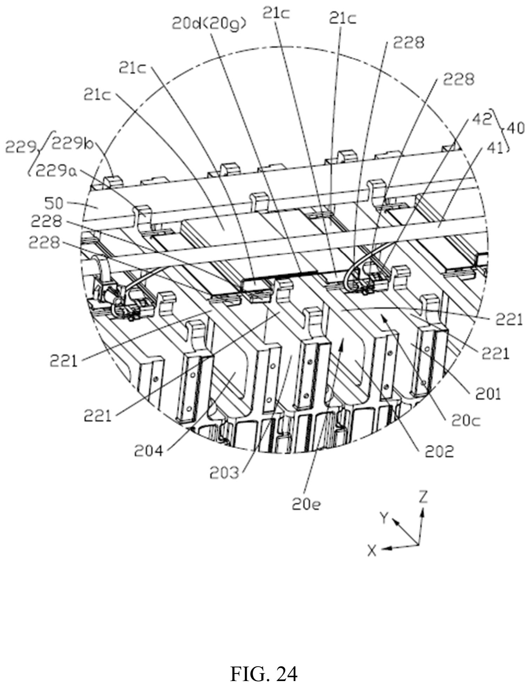

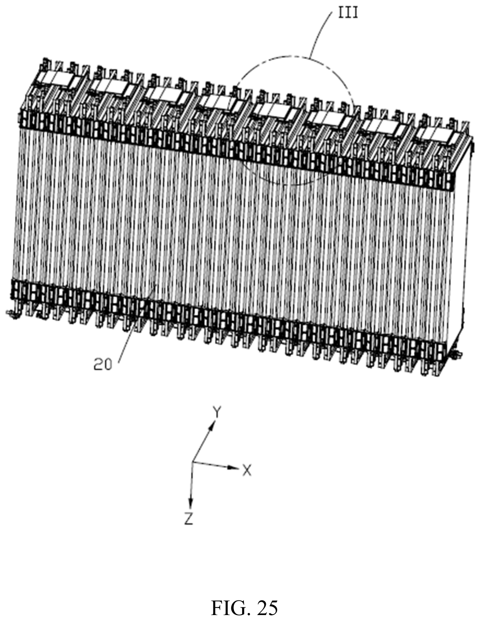

Referring to FIGs. 21 to 26, in some embodiments, the battery cell assembly 20 includes a first battery cell unit 201 and a second battery cell unit 202, where the first battery cell unit 201 and the second battery cell unit 202 are arranged adjacent to each other along the first direction X. An electrode terminal 21c of the first battery cell unit 201 and an electrode terminal 21c of the second battery cell unit 202 are bent and connected. Along the first direction X, a second space 20c exists between the bracket 22 of the first battery cell unit 201 and the bracket 22 of the second battery cell unit 202. The fourth portion 228 of the first battery cell unit 201 faces the fourth portion 228 of the second battery cell unit 202, and the fourth portion 228 of the second battery cell unit 202 faces the fourth portion 228 of the first battery cell unit 201.

Along the third direction Z, a projection of the fourth portion 228 of the first battery cell unit 201 is located within a projection of the second space 20c, and a projection of the fourth portion 228 of the second battery cell unit 202 is located within the projection of the second space 20c.

In some embodiments, the battery cell assembly 20 includes a third battery cell unit 203, where the second battery cell unit 202 and the third battery cell unit 203 are arranged adjacent to each other along the first direction X. A fourth portion 228 of the third battery cell unit 203 is far from a first portion 221 of the second battery cell unit 202. An electrode terminal 21c of the third battery cell unit 203 is bent and connected to the electrode terminal 21c of the first battery cell unit 201 and/or the electrode terminal 21c of the second battery cell unit 202. The electrode terminal 21c of the first battery cell unit 201 and the electrode terminal 21c of the second battery cell unit 202 are bent along the first direction X, and the electrode terminal 21c of the third battery cell unit 203 is bent along a direction opposite to the first direction X.

Optionally, the electrode terminal 21c of the third battery cell unit 203 is welded to the electrode terminal 21c of the first battery cell unit 201 and the electrode terminal 21c of the second battery cell unit 202. Optionally, the welding includes laser welding, ultrasonic welding, and the like.

Along the third direction Z, the electrode terminal 21c of the first battery cell unit 201, the electrode terminal 21c of the second battery cell unit 202, and the electrode terminal 21c of the third battery cell unit 203 are stacked to form a first stacked portion 20d. Along the third direction Z, a projection of the first stacked portion 20d is located between a projection of the fourth portion 228 of the second battery cell unit 202 and a projection of the fourth portion 228 of the third battery cell unit 203. This can reduce interference of the fourth portion 228 with the first stacked portion 20d, facilitating welding of the first stacked portion 20d.

The stacking includes various manners. For example, the electrode terminal 21c of the first battery cell unit 201 is located between the electrode terminal 21c of the second battery cell unit 202 and the electrode terminal 21c of the third battery cell unit 203. For example, the electrode terminal 21c of the second battery cell unit 202 is located between the electrode terminal 21c of the first battery cell unit 201 and the electrode terminal 21c of the third battery cell unit 203. For example, the electrode terminal 21c of the third battery cell unit 203 is located between the electrode terminal 21c of the first battery cell unit 201 and the electrode terminal 21c of the second battery cell unit 202. In some embodiments, along the third direction Z, the projection of the first stacked portion 20d is located between the projection of the fourth portion 228 of the second battery cell unit 202 and the projection of the fourth portion 228 of the third battery cell unit 203, facilitating welding.

In some embodiments, along the third direction Z, the projection of the first stacked portion 20d is located between the projection of the first portion 221 of the second battery cell unit 202 and the projection of the first portion 221 of the third battery cell unit 203, further facilitating welding of the first stacked portion 20d and reducing the impact on the bracket 22 during welding.

In some embodiments, along the first direction X, a third space 20e exists between the bracket 22 of the third battery cell unit 203 and the bracket 22 of the second battery cell unit 202. Along the third direction Z, the projection of the first stacked portion 20d is located within a projection of the third space 20e. This can further reduce interference of the fourth portion 228 with the first stacked portion 20d, further facilitating welding of the first stacked portion 20d.

In some embodiments, the battery cell assembly 20 includes a fourth battery cell unit 204, where the third battery cell unit 203 and the fourth battery cell unit 204 are arranged adjacent to each other along the first direction X. The fourth portion 228 of the third battery cell unit 203 faces a fourth portion 228 of the fourth battery cell unit 204, and the fourth portion 228 of the fourth battery cell unit 204 faces the fourth portion 228 of the third battery cell unit 203.

Along the first direction X, a fourth space 20f exists between the bracket 22 of the third battery cell unit 203 and the bracket 22 of the fourth battery cell unit 204. Along the third direction Z, the projection of the fourth portion 228 of the third battery cell unit 203 is located within a projection of the fourth space 20f, and a projection of the fourth portion 228 of the fourth battery cell unit 204 is located within the projection of the fourth space 20f. An electrode terminal 21c of the fourth battery cell unit 204 is bent and connected to the first stacked portion 20d, forming an overlap portion 20g. Optionally, the electrode terminal 21c of the fourth battery cell unit 204 may be disposed between the electrode terminals 21c in the first stacked portion 20d. Optionally, the electrode terminal 21c of the fourth battery cell unit 204 and the first stacked portion 20d are sequentially stacked.

In some embodiments, along the third direction Z, a projection of the overlap portion 20g is located between the projection of the fourth portion 228 of the second battery cell unit 202 and the projection of the fourth portion 228 of the third battery cell unit 203, facilitating welding of the overlap portion 20g.

In some embodiments, along the third direction Z, the projection of the overlap portion 20g is located between the projection of the first portion 221 of the second battery cell unit 202 and the projection of the first portion 221 of the third battery cell unit 203, further facilitating welding of the first stacked portion 20d and reducing the impact on the bracket 22 during welding.

Optionally, along the third direction Z, the projection of the overlap portion 20g is located within the projection of the third space 20e. This can further reduce interference of the fourth portion 228 with the overlap portion 20g, further facilitating welding of the overlap portion 20g.

In some embodiments, the electrode terminal 21c of the first battery cell unit 201 and the electrode terminal 21c of the second battery cell unit 202 are connected in parallel to form a first group of battery cells, and the electrode terminal 21c of the third battery cell unit 203 and the electrode terminal 21c of the fourth battery cell unit 204 are connected in parallel to form a second group of battery cells. The first group of battery cells and the second group of battery cells are connected in series.

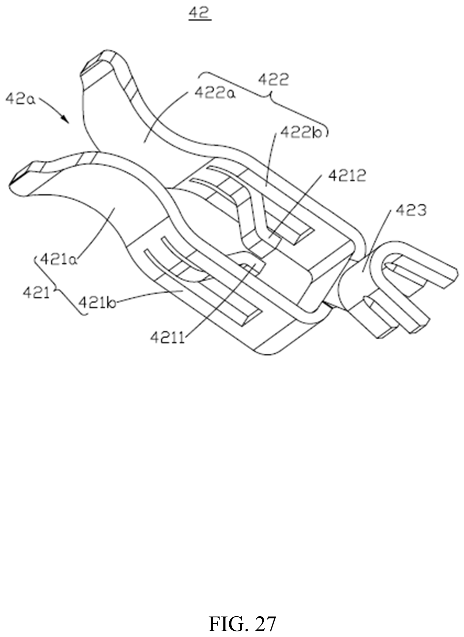

Referring to FIG. 15 and FIGs. 21 to 27, in some embodiments, the battery module 100 includes a collection assembly 40, where the collection assembly 40 includes a wire 41 and a plurality of sampling members 42, and the wire 41 is connected to each sampling member 42. Optionally, the sampling member 42 is connected to the electrode terminal 21c. Optionally, the sampling member 42 is connected to the fourth portion 228 and the electrode terminal 21c disposed at the fourth portion 228. The sampling member 42 is fixed to the fourth portion 228.

In some embodiments, the fourth portion 228 includes a third side surface 228a and a fourth side surface 228b arranged along a direction opposite to the third direction Z, where the third side surface 228a is farther from the body portion 211 than the fourth side surface 228b. One side of the sampling member 42 is connected to the fourth side surface 228b, and the electrode terminal 21c is located between the third side surface 228a and the sampling member 42.

In some embodiments, at least one of the third side surface 228a and the fourth side surface 228b is provided with a step portion 228c, and the sampling member 42 is connected to the step portion 228c. This can improve the connection strength between the sampling member 42 and the fourth portion 228 and reduce the risk of the sampling member 42 detaching from the fourth portion 228.

Optionally, the third side surface 228a is provided with a step portion 228c, and the fourth side surface 228b is provided with a step portion 228c. This can further improve the connection strength between the sampling member 42 and the fourth portion 228 and further reduce the risk of the sampling member 42 detaching from the fourth portion 228.

In some embodiments, the step portion 228c includes a first step surface 2281 and a second step surface 2282, where the first step surface 2281 and the second step surface 2282 are arranged along the second direction Y. Along the third direction Z, a thickness of the first step surface 2281 is less than a thickness of the second step surface 2282 to form the step portion 228c. The sampling member 42 has a portion connected to the first step surface 2281 and another portion connected to the second step surface 2282. Along the third direction Z, a projection of the first step surface 2281 overlaps the projection of the electrode terminal 21c, and the electrode terminal 21c is disposed at the first step surface 2281. Along the third direction Z, a projection of the second step surface 2282 and the projection of the electrode terminal 21c are spaced apart from each other.

In some embodiments, the first step surface 2281 is provided with a first limiting portion 2281a, where the first limiting portion 2281a is formed by a recess in a surface of the first step surface 2281. When the sampling member 42 is connected to the fourth portion 228, a portion of the sampling member 42 is disposed at the first limiting portion 2281a. This can restrict the sampling member 42 from detaching from the fourth portion 228 and improve the connection strength between the sampling member 42 and the fourth portion 228.

In some embodiments, along the third direction Z, a projection of the first limiting portion 2281a and the projection of the electrode terminal 21c are spaced apart from each other. This can reduce the risk of the sampling member 42 pressing the electrode terminal 21c into the first limiting portion 2281a, facilitating protection for the electrode terminal 21c.

In some embodiments, the bracket 22 includes two fourth portions 228, where the two fourth portions 228 are disposed opposite to each other along the second direction Y. This facilitates adjustment of positions of the wire 41 and the sampling member 42, facilitating spatial layout. Along the third direction Z, the projection of the electrode terminal 21c is located between projections of the first limiting portions 2281a of the two fourth portions 228.

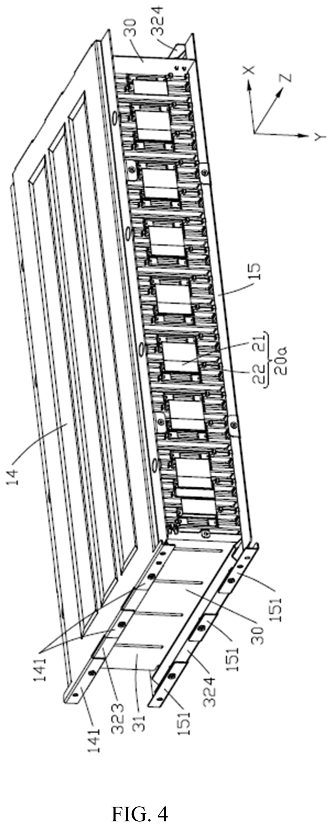

Referring to FIGs. 4, 6, and 27, in some embodiments, the sampling member 42 includes a first part 421 and a second part 422, where one end of the first part 421 is connected to one end of the second part 422, and another end of the first part 421 is spaced apart from another end of the second part 422 to form an opening 42a. The first part 421 includes a first section 421a, and the second part 422 includes a second section 422a. The first section 421a is connected to the third side surface 228a, and the second section 422a is connected to the fourth side surface 228b. Optionally, the first section 421a is connected to the first step surface 2281 of the third side surface 228a, and the second section 422a is connected to the first step surface 2281 of the fourth side surface 228b.

In some embodiments, the first section 421a is bent toward the second section 422a, and the first section 421a is connected to the first step surface 2281. The first step surface 2281 can restrict the first section 421a, improving the connection strength between the first section 421a and the step portion 228c. The first section 421a and the second section 422a form the opening 42a, and the second section 422a is bent toward the first section 421a. This can improve a clamping force between the first section 421a and the second section 422a, conducive to improving the connection strength between the sampling member 42 and the fourth portion 228, thereby improving the connection strength between the sampling member 42 and the electrode terminal 21c. A free end of the first section 421a is bent far from the second section 422a, and a free end of the second section 422a is bent far from the first section 421a, which can enlarge the opening 42a, facilitating connection of the sampling member 42 to the fourth portion 228.

In some embodiments, the first part 421 includes a third section 421b, where the third section 421b is connected to the first section 421a. The third section 421b is provided with a first curved portion 4211 bent toward the first limiting portion 2281a. When the sampling member 42 is connected to the fourth portion 228, the first curved portion 4211 is disposed at the first limiting portion 2281a, and the first curved portion 4211 is configured to restrict the sampling member 42 from detaching from the fourth portion 228, improving the connection strength between the sampling member 42 and the fourth portion 228.

The second part 422 includes a fourth section 422b, where the fourth section 422b is connected to the second section 422a. The fourth section 422b is provided with a second curved portion 4221 bent toward the first limiting portion 2281a. When the sampling member 42 is connected to the fourth portion 228, the second curved portion 4221 is disposed at the first limiting portion 2281a, and the second curved portion 4221 is configured to restrict the sampling member 42 from detaching from the fourth portion 228, further improving the connection strength between the sampling member 42 and the fourth portion 228.

In some embodiments, the first part 421 and the second part 422 are integrally formed, for example, integrally formed through punching.

In some embodiments, the sampling member 42 includes a third part 423. The third part 423 is connected to the first part 421 and/or the second part 422. The wire 41 is connected to the third part 423. The third part 423 can improve the connection strength between the wire 41 and the sampling member 42 and facilitate the extension of the wire 41 from the sampling member 42.

In some embodiments, the sampling member 42 can collect electrical signal information of the battery cell 21, where the electrical signal information includes but is not limited to voltage, current, and temperature.

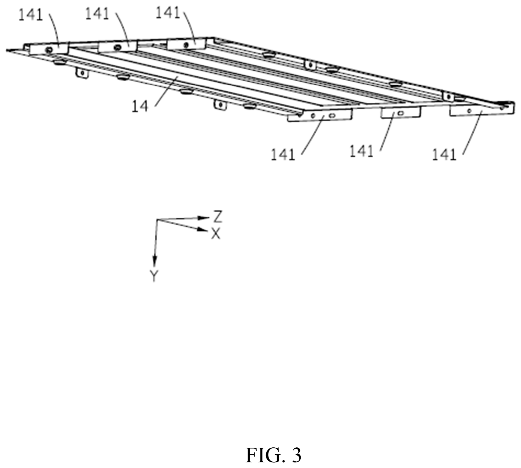

Referring to FIGs. 3 to 5 and FIGs. 17 to 20, in some embodiments, the elastic member 30 is disposed between the front wall 13 and the battery cell assembly 20, and the bent portion 32 is fixed to the top wall 14 and the bottom wall 15. The elastic member 30 can apply pressure to the battery cell assembly 20 and contract based on the expansion of the battery cell assembly 20 to provide an expansion space for the battery cell assembly 20.

In some embodiments, the elastic member 30 is disposed on a side of the battery cell assembly 20, the side of the battery cell assembly 20 being a side far from the front wall 13, the bent portion 32 is fixed to the top wall 14 and the bottom wall 15, and the housing 10 and the elastic member 30 form an accommodation space, where the battery cell assembly 20 is disposed in the accommodation space. The elastic member 30 can apply pressure to the battery cell assembly 20 and contract based on the expansion of the battery cell assembly 20 to provide an expansion space for the battery cell assembly 20.

In some embodiments, the battery module 100 includes two elastic members 30. One of the elastic members 30 is disposed between the front wall 13 and the battery cell assembly 20, and along the first direction X, the bent portion 32 is fixed to one side of the top wall 14 and the bottom wall 15. The other elastic member 30 is disposed on a side of the battery cell assembly 20, the side of the battery cell assembly 20 being a side facing away from the front wall 13, and along the first direction X, the bent portion 32 is fixed to another side of the top wall 14 and the bottom wall 15. The housing 10 and the other elastic member 30 form an accommodation space, where the battery cell assembly 20 is disposed in the accommodation space. The two elastic members 30 can further apply pressure to the battery cell assembly 20 and contract based on the expansion of the battery cell assembly 20, further providing an expansion space for the battery cell assembly 20, which is conducive to improving the service life of the battery module.

In another embodiment, a portion of the bent portion 32 is fixed to the bottom wall 15, and a portion of the bent portion 32 is fixed to the first side wall 11 and the second side wall 12.

In some embodiments, when the battery cell 21 does not expand, the elastic member 30 does not apply pressure to the battery cell unit 20a. When the battery cell 21 expands, the battery cell 21 compresses the elastic member 30, and the elastic member 30 applies pressure to the battery cell 21.

In some embodiments, when the battery cell 21 does not expand, the elastic member 30 applies pressure to the battery cell 21. When the battery cell 21 expands, the battery cell 21 compresses the elastic member 30, and the elastic member 30 applies a higher pressure to the battery cell 21.

In some embodiments, the base 31 is connected to a body portion 211 of an outermost battery cell 21. The base 31 is provided with a plurality of protrusions 311 spaced apart along the third direction Z, where the protrusion 311 is formed by recessing a side of the base 31 facing the body portion 211 toward a direction leaving the body portion 211. This can increase the structural strength of the base 31 and reduce the risk of deformation of the base 31 caused by uneven force on the base 31.

In some embodiments, the bent portion 32 includes a first bent portion 321 and a second bent portion 322, where the first bent portion 321 is disposed opposite to the second bent portion 322 along the second direction Y. The first bent portion 321 is connected to one side of the base 31. The second bent portion 322 is connected to another side of the base 31. The first bent portion 321 and the second bent portion 322 can act on the battery cell assembly 20 through the base 31, and the first bent portion 321 and the second bent portion 322 can provide an expansion space for the battery cell assembly 20.

In another embodiment, along the third direction Z, the first bent portion 321 is connected to one side of the base 31, and the second bent portion 322 is connected to another side of the base 31.

In some embodiments, the elastic member 30 includes a first connection section 323, where the first connection section 323 is connected to a side of the first bent portion 321 far from the base 31, and the first connection section 323 is fixed to the top wall 14. The first bent portion 321 is fixed to the top wall 14 through the first connection section 323, so that an acting force on the bent portion 32 can be transferred to the housing 10.

In some embodiments, the first connection section 323 is parallel to the base 31, facilitating deformation of the elastic member 30 in the first direction X.

In some embodiments, the elastic member 30 includes a second connection section 324, where the second connection section 324 is connected to a side of the second bent portion 322 facing away from the base 31, and the second connection section 324 is fixed to the bottom wall 15. The second bent portion 322 is fixed to the bottom wall 15 through the second connection section 324, so that an acting force on the bent portion 32 can be transferred to the housing 10.

In some embodiments, the second connection section 324 is parallel to the base 31, facilitating deformation of the elastic member 30 in the first direction X.

In some embodiments, the top wall 14 is provided with a first fixed portion 141. Along the first direction X, a projection of the first connection section 323 overlaps a projection of the first fixed portion 141. The first connection section 323 is fixed to the first fixed portion 141, for example, fixed by welding, fixed by adhesion, fixed by abutment, fixed by clamping, or fixed by a screw. Optionally, the top wall 14 is provided with a plurality of first fixed portions 141, where the plurality of first fixed portions 141 are spaced apart along the third direction Z, and the first connection section 323 is fixed to the plurality of first fixed portions 141. This can improve the connection strength between the first connection section 323 and the top wall 14.

In some embodiments, along the first direction X, two sides of the top wall 14 are each provided with the first fixed portion 141. The first connection section 323 is fixed to the first fixed portion 141.

In some embodiments, the first fixed portion 141 is closer to the battery cell assembly 20 than the first connection section 323, facilitating fixation of the first fixed portion 141 and the first connection section 323.

In some embodiments, a structural strength of the top wall 14 is higher than a structural strength of the elastic member 30, reducing the risk of deformation of the top wall 14 caused by the acting force on the first bent portion 321.

In some embodiments, a thickness of the top wall 14 is greater than a maximum thickness among the base 31, the first bent portion 321, and the first connection section 323. This enhances the structural strength of the top wall 14 and reduces the risk of deformation of the top wall 14 caused by the acting force on the first bent portion 321.

In some embodiments, the bottom wall 15 is provided with a second fixed portion 151. Along the first direction X, a projection of the second connection section 324 overlaps a projection of the second fixed portion 151. The second connection section 324 is fixed to the second fixed portion 151, for example, fixed by welding, fixed by adhesion, fixed by abutment, fixed by clamping, or fixed by a screw. Optionally, the bottom wall 15 is provided with a plurality of second fixed portions 151, where the plurality of second fixed portions 151 are spaced apart along the third direction Z, and the second connection section 324 is fixed to the plurality of second fixed portions 151. This can improve the connection strength between the second connection section 324 and the bottom wall 15.

In some embodiments, along the first direction X, two sides of the bottom wall 15 are each provided with the second fixed portion 151. The second connection section 324 is fixed to the second fixed portion 151.

In some embodiments, the second fixed portion 151 is closer to the battery cell assembly 20 than the second connection section 324, facilitating fixation of the second fixed portion 151 and the second connection section 324.

In some embodiments, a structural strength of the bottom wall 15 is higher than the structural strength of the elastic member 30, reducing the risk of deformation of the bottom wall 15 caused by the acting force on the second bent portion 322.

In some embodiments, a thickness of the bottom wall 15 is greater than a maximum thickness among the base 31, the second bent portion 322, and the second connection section 324. This enhances the structural strength of the bottom wall 15 and reduces the risk of deformation of the bottom wall 15 caused by the acting force on the second bent portion 322.

In some embodiments, the first bent portion 321 includes a first bent section 321a and a second bent section 321b, where the first bent section 321a is connected to the base 31, and the second bent section 321b is connected to the first bent section 321a and the first connection section 323. A first included angle A₁ is formed between the first bent section 321a and the base 31, and a second included angle B₁ is formed between the second bent section 321b and the first connection section 323, where A₁ ≥ B₁. This is conducive to improving deformation resistance of the first bent section 321a and reducing the risk of deformation of the elastic member 30 in the first direction X.

In some embodiments, a third included angle C₁ is formed between the first bent section 321a and the second bent section 321b, where C₁ > A₁. This is conducive to improving the uniform deformation of the first bent portion 321.

In some embodiments, C₁ = 2A₁ = 2B₁. This is conducive to further improving the uniform deformation of the first bent portion 321.

In some embodiments, the second bent portion 322 includes a third bent section 322a and a fourth bent section 322b, where the third bent section 322a is connected to the base 31, and the fourth bent section 322b is connected to the third bent section 322a and the second connection section 324. A first included angle A₂ is formed between the third bent section 322a and the base 31, a second included angle B₂ is formed between the fourth bent section 322b and the second connection section 324 form, and a third included angle C₂ is formed between the third bent section 322a and the fourth bent section 322b, where A₂ ≥ B₂. This is conducive to improving deformation resistance of the third bent section 322a and reducing the risk of deformation of the elastic member 30 in the first direction X.

In some embodiments, C₂ > A₂. This is conducive to improving the uniform deformation of the second bent portion 322.

In some embodiments, C₂ = 2B₂ = 2A₂. This is conducive to further improving the uniform deformation of the second bent portion 322.

In some embodiments, the second bent portion 322 is set to have the same angle as the first bent portion 321. When stressed, the first bent portion 321 and the second bent portion 322 can be stressed evenly and deform evenly, reducing the risk of rotation of the elastic member 30 caused by uneven deformation. Optionally, A₁ = A₂, B₁ = B₂, and C₁ = C₂.

In some embodiments, the battery module 100 includes a first buffer member 101, where the first buffer member 101 is disposed between the elastic member 30 and the outermost battery cell 21, and the elastic member 30 and the first buffer member 101 are arranged along the first direction X. The first buffer member 101 is in direct contact with the base 31 and the body portion 211 of the outermost battery cell 21. When the battery cell 21 expands, the first buffer member 101 can be compressed to further provide an expansion space for the battery cell 21 and further apply pressure to the battery cell 21. Optionally, the first buffer member 101 includes foam.

In some embodiments, the battery module 100 includes a second buffer member 102, where the second buffer member 102 is disposed between the other elastic member 30 and another outermost battery cell 21, and the second buffer member 102 and the elastic member 30 are arranged along the first direction X. The second buffer member 102 is in direct contact with the base 31 and the body portion 211 of the outermost battery cell 21. When the battery cell 21 expands, the second buffer member 102 can be compressed to further provide an expansion space for the battery cell 21 and further apply pressure to the battery cell 21. Optionally, the second buffer member 102 includes foam.

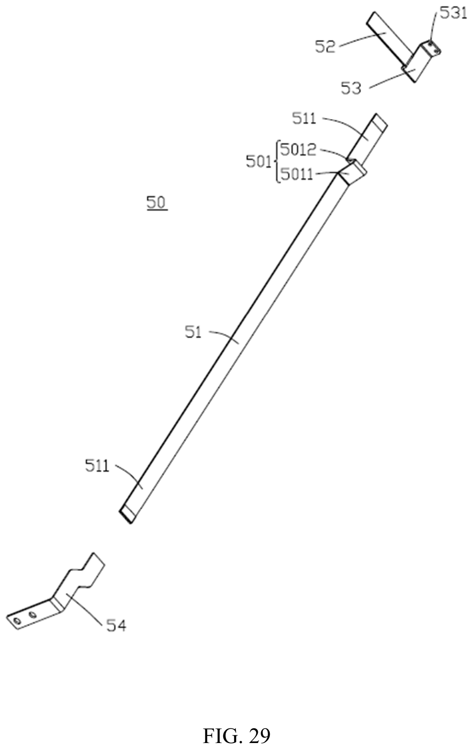

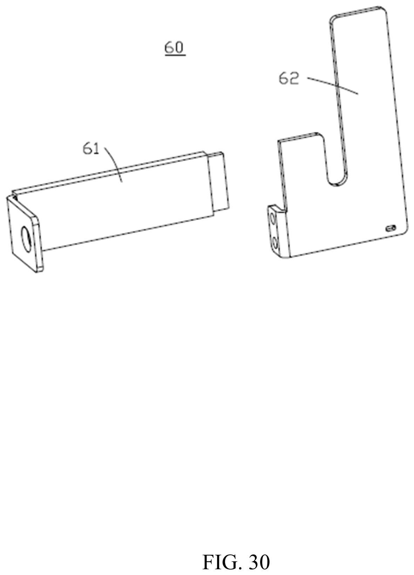

Referring to FIGs. 3, 5, 15, 24, 29, and 30, in some embodiments, the battery module 100 includes a first conductive member 50, where one end of the first conductive member 50 is fixed to the elastic member 30. The first conductive member 50 includes a buffer portion 501. The buffer portion 501 is configured to be stretched by the elastic member 30 along the first direction X when the battery cell assembly 20 expands. The buffer portion 501 can buffer pulling of the elastic member 30 on the first conductive member 50, facilitating the connection strength between the first conductive member 50 and the elastic member 30.

In some embodiments, the first conductive member 50 is connected to the electrode terminal 21c, and the first conductive member 50 is configured for electrical energy reception or output of the battery cell assembly 20. When the battery cell assembly 20 expands, the buffer portion 501 can reduce pulling on the electrode terminal 21c, which is conducive to protecting the electrode terminal 21c.

In some embodiments, the buffer portion 501 includes a first bent element 5011 and a second bent element 5012. The first bent element 5011 is connected to the second bent element 5012 to form a first folding included angle α. When the buffer portion 501 is stretched, the first folding included angle α gradually increases, reducing a stretching force applied to the buffer portion 501, thereby facilitating stretching. Optionally, the buffer portion 501 is a V-shaped structure.

In some embodiments, the buffer portion 501 includes a third bent element (not shown in the figure), where the third bent element is connected to the first bent element 5011 and the second bent element 5012, forming a second folding included angle and a third folding included angle. When the buffer portion 501 is stretched, the second folding included angle and the third folding included angle gradually increase, which can increase the stretching length, further buffering pulling of the elastic member 30 on the first conductive member 50 and the electrode terminal 21c. Optionally, the buffer portion 501 is a concave structure.

In some embodiments, the first conductive member 50 includes a first conductive portion 51, a second conductive portion 52, and a third conductive portion 53. The buffer portion 501 is disposed at the first conductive portion 51. The first conductive portion 51 is connected to the third conductive portion 53. The second conductive portion 52 is connected to the third conductive portion 53. The third conductive portion 53 is fixed to the base 31 of the elastic member 30 close to the second buffer member 102. The second conductive portion 52 is connected to the electrode terminal 21c of the battery cell 21 close to the second buffer member 102.

In some embodiments, the first conductive portion 51 is more easily bent than the second conductive portion 52. Optionally, the first conductive portion 51 includes a soft copper bar. Optionally, the soft copper bar is formed by stacking a plurality of thin copper bars, where the thin copper bar has a thickness less than 0.5 mm. Optionally, the second conductive portion 52 includes a hard copper bar. Optionally, the third conductive portion 53 includes a hard copper bar. Optionally, the hard copper bar is integrally formed. In some embodiments, the second conductive portion 52 and the third conductive portion 53 are integrally formed. The first conductive portion 51 is more easily bent, and when the battery cell 21 expands, the first conductive portion 51 is more easily stretched, facilitating movement of the battery cell unit 20a.

In some embodiments, the first conductive portion 51 and the second conductive portion 52 are connected by welding, for example, laser welding.

In some embodiments, the third conductive portion 53 is provided with a third fixed portion 531, where the third fixed portion 531 is fixed to the base 31 of the elastic member 30 close to the second buffer member 102. Along the first direction X, a projection of the third fixed portion 531 and a projection of the battery cell housing 21a are spaced apart from each other, allowing the first conductive member 50 to be better stretched along the first direction X.

In some embodiments, along the first direction X, a distance between the buffer portion 501 and the elastic member 30 close to the second buffer member 102 is less than a distance between the buffer portion 501 and the elastic member 30 close to the first buffer member 101, further facilitating stretching of the buffer portion 501.

In some embodiments, the battery module 100 includes a connection terminal 103, and the first conductive member 50 includes a fourth conductive portion 54, where a side of the first conductive portion 51 facing away from the third conductive portion 53 is connected to the fourth conductive portion 54, the fourth conductive portion 54 is connected to the connection terminal 103, and the battery cell assembly 20 is connected to an external device through the connection terminal 103.

In some embodiments, the first conductive portion 51 includes a straight portion 511, where along the first direction X, two ends of the buffer portion 501 are connected to the straight portion 511. The bracket 22 further includes a fourth fixed portion 229, where the fourth fixed portion 229 is connected to the first portion 221, the first portion 221 and the fourth fixed portion 229 are arranged along the third direction Z, and the straight portion 511 is fixed to the fourth fixed portion 229.

In some embodiments, the fourth fixed portion 229 includes a first limiting protrusion 229a and a second limiting protrusion 229b spaced apart along the second direction Y, and the straight portion 511 is disposed between the first limiting protrusion 229a and the second limiting protrusion 229b.

In some embodiments, the battery module 100 includes a second conductive member 60, where one terminal of the second conductive member 60 is connected to the electrode terminal 21c of the battery cell 21 close to the first buffer member 101, and another terminal is fixed to the connection terminal 103. The battery cell assembly 20 implements electrical energy reception or output through the second conductive member 60. Optionally, the electrode terminal 21c connected to the first conductive member 50 and the electrode terminal 21c connected to the second conductive member 60 have opposite polarities.

In some embodiments, along the third direction Z, the first conductive member 50 and the second conductive member 60 are located on a same side of the battery cell assembly 20, facilitating spatial layout.

In some embodiments, the second conductive member 60 includes a fifth conductive portion 61 and a sixth conductive portion 62, where the fifth conductive portion 61 has one terminal fixed to the connection terminal 103 and another terminal connected to the sixth conductive portion 62. The sixth conductive portion 62 is fixed to the base 31 of the elastic member 30 close to the first buffer member 101, and the sixth conductive portion 62 is connected to the electrode terminal 21c of the battery cell 21 close to the first buffer member 101.

In some embodiments, the sixth conductive portion 62 is a hard copper bar, and the fifth conductive portion 61 is a soft copper bar, facilitating the connection of the sixth conductive portion 62 and the electrode terminal 21c.

In some embodiments, the sixth conductive portion 62 and the fifth conductive portion 61 are connected by welding, for example, laser welding.

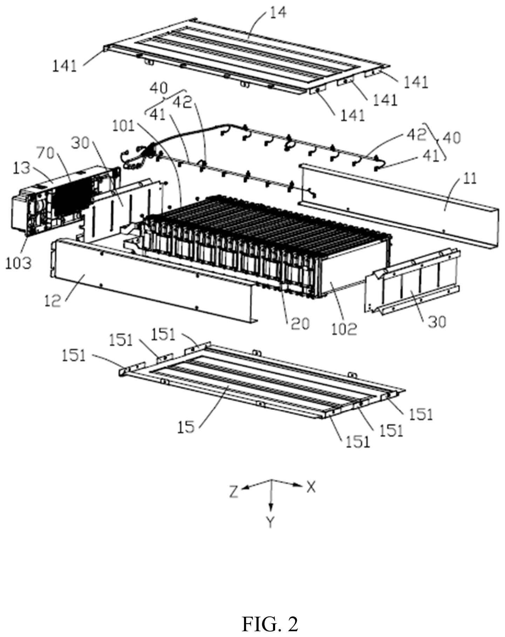

Referring to FIGs. 2 and 5, in some embodiments, the battery module 100 includes a circuit board 70, where the circuit board 70 is disposed between the front wall 13 and the elastic member 30. The circuit board 70 is connected to the wire 41 and can receive data collected by the sampling member 42. The circuit board 70 includes a BMS (Battery Management System) assembly. The BMS assembly includes a plurality of electronic components, and the plurality of electronic components can implement functions such as control, protection, communication, electrical quantity calculation, signal transmission, and electrical energy transmission for the battery cells 21. Optionally, the circuit board 70 includes a flexible circuit board (FPC, Flexible Printed Circuit). Optionally, the circuit board 70 includes a printed circuit board (PCB, Printed Circuit Board), and the circuit board 70 is provided with a plurality of wires (not shown in the figure).

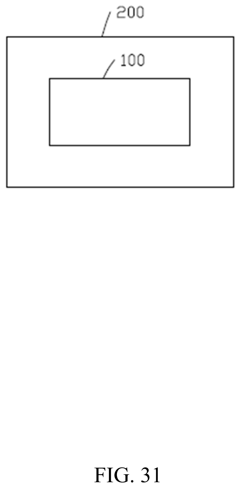

Referring to FIG. 31, this application further provides an electric device 200 using the foregoing battery module 100. In an embodiment, the electric device 200 in this application may be but is not limited to an electronic device, a drone, a backup power source, an electric vehicle, an electric motorcycle, an electric motor bicycle, an electric tool, a large household battery module, or the like.

Those of ordinary skill in the art should appreciate that some foregoing embodiments are for description of this application only but not for limiting this application. Appropriate modifications and variations made to some foregoing embodiments without departing from the essential spirit and scope of this application all fall within the scope of this application.

## Claims

1. A battery module, comprising:
a housing;
a battery cell assembly disposed in the housing, the battery cell assembly comprises battery cell units arranged along a first direction; and
an elastic member) comprising a base and a bent portion, the base is connected to the bent portion, the bent portion is fixed to the housing, and the elastic member and the battery cell assembly are arranged in the first direction; and
the base is configured to be able to apply pressure to the battery cell units, and the bent portion is configured to be able to provide an expansion space for the battery cell units.

2. The battery module according to claim 1, wherein the bent portion comprises a first bent portion and a second bent portion, the first bent portion is disposed opposite to the second bent portion along a second direction, the second direction is perpendicular to the first direction; and
the first bent portion is connected to one side of the base, and the second bent portion is connected to another side of the base.

3. The battery module according to claim 2, wherein the elastic member comprises a first connection section, the first connection section is connected to a side of the first bent portion, the side of the first bent portion being a side facing away from the base, and the first connection section is fixed to the housing.

4. The battery module according to claim 3, wherein the first bent portion comprises a first bent section and a second bent section, the first bent section is connected to the base and the second bent section; and the second bent section is connected to the first connection section.

5. The battery module according to claim 4, wherein a first included angle A₁ is formed between the first bent section and the base, and a second included angle B₁ is formed between the second bent section and the first connection section, wherein A₁ ≥ B₁.

6. The battery module according to claim 5, wherein a third included angle C₁ is formed between the first bent section and the second bent section, wherein C₁ > A₁.

7. The battery module according to claim 6, wherein C₁ = 2 A₁ = 2 B₁.

8. The battery module according to any one of claims 3 to 6, wherein the housing comprises a top wall, the top wall is provided with a first fixed portion; along the first direction, a projection of the first connection section overlaps a projection of the first fixed portion; and the first connection section is fixed to the first fixed portion.

9. The battery module according to claim 8, wherein a structural strength of the top wall is higher than a structural strength of the elastic member.

10. The battery module according to any one of claims 3 to 9, wherein the elastic member comprises a second connection section, the second connection section is connected to a side of the second bent portion, the side of the second bent portion being a side facing away from the base, and the second connection section is fixed to the housing.

11. The battery module according to claim 10, wherein the housing comprises a bottom wall, the bottom wall is disposed opposite to the top wall along the second direction; the bottom wall is provided with a second fixed portion; along the first direction, a projection of the second connection section overlaps a projection of the second fixed portion; and the second connection section is fixed to the second fixed portion.

12. The battery module according to any one of claims 2 to 11, wherein the first bent portion and the second bent portion have identical structures.

13. The battery module according to any one of claims 1 to 12, wherein the housing comprises a front wall, the front wall and the battery cell assembly are arranged along the first direction; and
along the first direction, the elastic member is disposed between the front wall and the battery cell assembly.

14. The battery module according to claim 13, wherein the battery module comprises two elastic members, along the first direction, one of the two elastic members is disposed between the front wall and the battery cell assembly; and
the other elastic member is disposed on a side of the battery cell assembly, theside of the battery cell assembly being a side facing away from the front wall, the housing and the elastic member form an accommodation space, and the battery cell assembly is disposed in the accommodation space.

15. The battery module according to any one of claims 1 to 12, wherein the housing and the elastic member form an accommodation space, wherein the battery cell assembly is disposed in the accommodation space.

16. The battery module according to any one of claims 1 to 15, wherein each of the battery cell units comprises a battery cell and a bracket, the battery cell comprises a battery cell housing, an electrode assembly disposed in the battery cell housing, and an electrode terminal connected to the electrode assembly and extending from the battery cell housing, wherein
the battery cell housing comprises a body portion and a first sealing portion, the electrode assembly is disposed in the body portion, the body portion comprising a first side surface and a second side surface arranged along the second direction, and the electrode terminal extending from the first sealing portion; and
the bracket comprises a first extension portion, wherein the first extension portion covers at least a portion of the first side surface; and
along the first direction, the first extension portion is configured to be able to move relative to the housing.

17. The battery module according to claim 16, wherein the bracket comprises a second extension portion, the second extension portion covers at least a portion of the second side surface; and
along the first direction, the second extension portion is configured to be able to move relative to the housing.

18. The battery module according to claims 16 and 17, wherein the adjacent body portions are in direct contact.

19. The battery module according to any one of claims 16 to 18, wherein the adjacent battery cell housings exert pressure on each other.

20. The battery module according to any one of claims 16 to 19, wherein the bracket is integrally formed on the battery cell.

21. The battery module according to any one of claims 16 to 20, wherein the bracket comprises an insulation bracket.

22. An electric device, comprising the battery module according to any one of claims 1 to 21.
